# EUROPÄISCHE PATENTSCHRIFT

(11) **EP 2 510 174 B1**
(45) Veröffentlichungstag und Bekanntmachung des Hinweises auf die Patenterteilung: **30.12.2020**
(21) Anmeldenummer: 10785351.7
(22) Anmeldetag: 30.11.2010
(51) Int. Cl.: E05F 3/10

(54) **HYDRAULISCHES ELEKTROMAGNETWEGEVENTIL UND TÜRSCHLIESSER MIT HYDRAULISCHEM ELEKTROMAGNETWEGEVENTIL**
HYDRAULIC ELECTROMAGNETIC WAY VALVE AND DOOR CLOSER WITH A HYDRAULIC ELECTROMAGNETIC WAY VALVE
SOUPAPE HYDRAULIQUE ÉLECTROMAGNÉTIQUE À VOIES ET UN DISPOSITIF DE FERMETURE DE PORTE AVEC UN SOUPAPE HYDRAULIQUE ÉLECTROMAGNÉTIQUE À VOIES

(30) Priorität: 01.12.2009 DE 102009056265; 01.04.2010 DE 102010013853
(43) Veröffentlichungstag der Anmeldung: 17.10.2012
(73) Patentinhaber: dormakaba Deutschland GmbH, 58256 Ennepetal (DE)
(72) Erfinder: WILDFÖRSTER, Thomas, 58332 Schwelm (DE)
(74) Vertreter: Balder IP Law, S.L.
(86) Internationale Anmeldenummer: PCT/EP2010/007249
(87) Internationale Veröffentlichungsnummer: WO 2011/066942

(56) Entgegenhaltungen:
- DE-B- 1 256 492
- US-A- 4 115 897
- US-A- 4 611 631
- US-A1- 2005 045 843

## Beschreibung

Die Erfindung betrifft ein hydraulisches Magnetwegeventil, insbesondere ein hydraulisches Cartridge-Magnetwegeventil und einen Türschließer mit dem hydraulischen Magnetwegeventil (siehe z.B. DE 12 56 492 B).

Der Stand der Technik unterscheidet zwischen Türschließern und Türantrieben. Bei Türschließern muss die Tür von einer Person manuell geöffnet werden. Während des Öffnungsvorgangs wird Energie, beispielsweise in einer Schließerfeder, gespeichert und der Türschließer kann die Tür selbstständig durch die gespeicherte Energie wieder schließen. Im Gegensatz dazu ist der Türantrieb eine Anordnung, die mittels zusätzlicher Hilfsenergie, zum Beispiel mittels Elektromotor und Hydraulik, die Tür automatisch öffnet und wieder schließt. Insbesondere bei der Betrachtung der Hydraulikkreisläufe in Türantrieben und Türschließern stellt man signifikante Unterschiede fest. Bei hydraulischen Türantrieben sind stets ein Motor und eine Pumpe vorhanden, die den erforderlichen Hydraulikdruck aufbringen. Die entsprechenden Druckkammern werden dann aktiv mit Hydraulikdruck beaufschlagt, wodurch das Öffnen der Tür bewirkt wird. Der Druck wird somit im Türantrieb von den internen Komponenten, Motor und Pumpe, erzeugt. Im Gegensatz dazu füllen sich Druckkammern in einem Türschließer durch Expansion der Kammern und durch Ansaugen des Hydrauliköls aus anderen Räumen des Türschließers. Hier wird durch öffnen der Tür die Energie für die Schließerfeder und für den Druckaufbau in den Türschließer eingebracht. Die Kraft- und Momentenverläufe sowie die auftretenden Belastungen sind infolgedessen bei einem Türschließer und bei einem Türantrieb grundlegend unterschiedlich.

Aufgabe vorliegender Erfindung ist es, ein hydraulisches Magnetwegeventil bereitzustellen, das bei kostengünstiger Herstellung sehrt kompakt aufgebaut ist und auch im hohen Druckbereich leckölfrei arbeitet. Ferner soll ein Türschließer mit dem hydraulischen Magnetwegeventil bereitgestellt werden, der bei kostengünstiger Herstellung sehr schmal aufgebaut ist und somit auch als integrierbarer Türschließer in beispielsweise einer Zarge oder einer Tür Verwendung findet. Darüber hinaus soll der Türschließer eine Feststell- und/oder Freilauffunktion aufweisen.

Die Aufgabe wird gelöst durch die Merkmale des unabhängigen Anspruchs. Die abhängigen Ansprüche haben vorteilhafte Weiterbildungen der Erfindung zum Gegenstand.

Die Erfindung umfasst ein hydraulisches Magnetventil, insbesondere hydraulisches 3/2-Magnetventil, umfassend ein Ventilgehäuse, eine in das Ventilgehäuse integrierte Ventilkammer mit einer ersten Ventilsitzbohrung als Verbindung zu einer ersten Leitung, insbesondere Druckleitung, einer freien Öffnung zu einer zweiten Leitung, insbesondere Arbeitsleitung, und einer zweiten Ventilsitzbohrung als Verbindung zu einer dritten Leitung, insbesondere Tankleitung. Ferner umfasst dieses hydraulische Magnetwegeventil einen Elektromagneten und einen durch den Elektromagneten bewegbaren und teilweise in der Ventilkammer angeordneten Ventilstößel. Der Ventilstößel umfasst dabei innerhalb der Ventilkammer eine der ersten Ventilsitzbohrung zugewandte erste Dichtfläche und eine der zweiten Ventilsitzbohrung zugewandte zweite Dichtfläche, sodass wahlweise die erste Ventilsitzbohrung oder die zweite Ventilsitzbohrung verschließbar ist. Ferner erstreckt sich der Ventilstößel aus der Ventilkammer hinaus durch die zweite Ventilsitzbohrung hindurch zum Elektromagneten.

Es ist vorgesehen, dass am Ventilstößel entlang oder im Ventilstößel eine Verbindung der dritten Leitung zu einem Ankerraum des Elektromagneten besteht, sodass ein Druckaufbau im Ankerraum vermieden wird. Insbesondere wird diese Verbindung dadurch realisiert, dass eine plane Fläche am Ventilstößel ausgeführt ist, oder dass der Ventilstößel als Mehrkant, insbesondere Vierkant, gefertigt ist.

Es ist vorgesehen, dass ein Durchmesser der ersten Ventilsitzbohrung kleiner ist als ein Durchmesser der zweiten Ventilsitzbohrung.

In bevorzugter Ausführung ist zwischen der ersten Ventilsitzbohrung und dem Ventilstößel eine Ventildruckfeder angeordnet. Das erfindungsgemäße Ventil kann somit in der Variante mit Kugel als federbelastetes Kugel-Kegel-Sitzventil bezeichnet werden.

In einer weiteren vorteilhaften Ausgestaltung ist vorgesehen, dass im unbestromten Zustand des Elektromagneten die zweite Dichtfläche, insbesondere Kegelfläche, die zweite Ventilsitzbohrung abdichtet, und dass im bestromten Zustand des Elektromagneten die erste Dichtfläche, insbesondere konvexe Oberfläche, die erste Ventilsitzbohrung abdichtet. Die bevorzugt vorgesehene Druckfeder dient dazu, dass im unbestromten Zustand die zweite Dichtfläche des Ventilstößels in die zweite Ventilsitzbohrung gedrückt wird.

Bevorzugt umfasst die erste Dichtfläche eine konvexe Oberfläche, insbesondere Kugel. Ferner bevorzugt umfasst die zweite Dichtfläche eine Kegelfläche, insbesondere eine Kegelringfläche. Durch lineares Verschieben bzw. Bewegen des Ventilstößels wird wahlweise die erste Ventilsitzbohrung mit der konvexen Oberfläche oder die zweite Ventilsitzbohrung mit der Kegelfläche verschlossen. Ein Klemmen oder Hängenbleiben in der Schaltstellung unter Druck wird durch die Kugelventilausführung mit der konvexen Oberfläche wirksam vermieden.

Ferner umfasst die Erfindung bevorzugt einen Filter, insbesondere in der ersten Leitung. Besonders bevorzugt wird der Filter außerhalb der Ventilkammer direkt vor dem Einlauf in die erste Ventilsitzbohrung angeordnet. Der Filter verhindert eine Verschmutzung des Öls und insbesondere eine Verschmutzung der beiden Ventilsitze. In einer weiteren bevorzugten Ausführung liegt die erste Ventilsitzbohrung direkt gegenüber der zweiten Ventilsitzbohrung. In bevorzugter Ausführung umfasst der Elektromagnet eine Spule, einen Anker, einen Polkern sowie einen Spalt zwischen Polkern und Anker. Der Polkern umfasst eine Bohrung entlang der Längsachse des Ventilstößels und bietet somit eine Aufnahme und eine lineare Führung für den Ventilstößel. Des Weiteren bevorzugt umfassen die erfindungsgemäßen Magnetwegeventile eine Steuerung/Regelung für den Elektromagneten. Mit dieser Steuerung/Regelung kann der Elektromagnet bestromt und unbestromt geschalten werden.

Ferner umfasst die Erfindung ein hydraulisches Cartridge-Magnetwegeventil, insbesondere hydraulisches Cartridge-3/2-Magnet-wegeventil, umfassend eines der soeben vorgestellten hydraulischen Magnetwegeventile, wobei das Gehäuse zum zumindest teilweisen Einführen in eine Ventilaufnahme ausgebildet ist. Diese Ventilaufnahme befindet sich in einem Bauteil, welches das Cartridge-3/2-Magnetwegeventil integral aufnimmt. Besonders bevorzugt werden die erste Leitung, insbesondere Druckleitung, und die zweite Leitung, insbesondere Arbeitsleitung, bezüglich der Längsachse des Ventilstößels radial bzw. senkrecht nach außen geführt. Des Weiteren befinden sich bevorzugt O-Ring-Dichtungen seitlich der nach außen geführten ersten und zweiten Leitungen auf der Oberfläche des Ventilgehäuses, sodass durch Einführen des Cartridge-Gehäuses diese Leitungen druckdicht angeschlossen werden können. Besonders bevorzugt umfasst das Ventilgehäuse hierzu in Umfangsrichtung verlaufende Ringkanäle. Von diesen Ringkanälen aus können bevorzugt mehrere radial gerichtete Kanäle für die erste Leitung und/oder mehrere radial gerichtete Kanäle für die zweite Leitung zur Ventilkammer führen.

Ferner ist es bevorzugt, dass das hydraulische Cartridge-Magnetwegeventil eine Volumenausgleichseinheit mit Tankraum umfasst. Diese Volumenausgleichseinheit mit Tankraum ist in das Ventilgehäuse integriert oder ist an das Ventilgehäuse angeflanscht. Der Tankraum ist bevorzugt mit der dritten Leitung verbunden. Das Ventil baut sich dabei bevorzugt entlang der Längsachse des Ventilstößels wie folgt auf: Die Ventilkammer mit Ventilstößel ist mittig angeordnet. Auf der einen Seite der Kammer ist die Volumenausgleichseinheit mit Tankraum integriert oder angeflanscht. Auf der anderen Seite der Ventilkammer wird der Elektromagnet montiert. Dadurch kann das hydraulische Cartridge-Magnet-wegeventil mit der Volumenausgleichseinheit voran in ein Bauteil eingeschoben werden. Der Elektromagnet und insbesondere ein Stecker am Elektromagnet ragen dabei bevorzugt aus dem Bauteil hervor. In bevorzugter Ausbildung ist der Tankraum der Volumenausgleichseinheit mittels eines Volumenausgleichskolbens und einer Ausgleichsfeder bzw. Druckfeder leicht druckbelastet.

Des Weiteren umfasst die Erfindung einen Türschließer, insbesondere einen Drehtürschließer, mit Feststellfunktion oder Freilauffunktion, umfassend eines der soeben beschriebenen hydraulischen Magnetventile oder eines der hydraulischen Cartridge-Magnetventile, wobei die Ventilaufnahme im Türschließer ausgebildet ist. Das hydraulische Magnetventil oder Cartridge-Magnetventil ist somit in das Gehäuse des Türschließers integriert oder angeflanscht und dient zur Steuerung der Hydraulik zwischen einem Schließdämpfungsraum, einem Sperrraum und einem Tankraum bzw. der Tankleitung.

Der Türschließer mit dem hydraulischen Magnetwegeventil umfasst bevorzugt des Weiteren ein Türschließergehäuse, eine mit einer Tür verbindbare Abtriebswelle, eine mit der Abtriebswelle verbundene und im Türschließergehäuse geführte Kolbenbaugruppe, eine Schließerfeder, eine zur Verbindung der Kolbenbaugruppe mit der Schließerfeder angeordnete Kolbenstange, und einen zum Blockieren der Schließerfeder ausgebildeten hydraulischen Sperrraum.

Bevorzugt umfasst der Türschließer zur Ausbildung der Freilauffunktion eine Freilaufanordnung, welche dazu ausgebildet ist, eine translatorische Bewegung der Kolbenbaugruppe entkoppelt von der Schließerfeder bei blockierter Schließerfeder zu ermöglichen. Alternativ ist bei der Feststellfunktion die Schließerfeder fest mit der Kolbenbaugruppe verwunden, sodass durch das Blockieren der Schließerfeder gleichzeitig die Kolbenbaugruppe und somit die Tür arretiert sind.

Bevorzugt kommt der Türschließer mit Freilauffunktion in Einrichtungen für körperbehinderte Menschen, Seniorenwohnungen oder Kindergärten sowie zur Absicherung an Brandschutztüren zum Einsatz. In Kombination mit einer Brandmeldeanlage wird die Schließung dieser Türen zur Vermeidung von Rauch- und Feuerausbreitung abgesichert, ohne den Türnutzern ein ständiges Öffnungsmoment herkömmlicher Türschließer zumuten zu müssen. Insbesondere bei Brandschutztüren müssen sehr starke Schließerfedern eingesetzt werden, sodass auch bei einem Luftzug in Gängen ein sicheres Schließen der Tür sichergestellt werden kann. Das Spannen dieser Schließerfedern bei jedem Öffnen der Tür ist insbesondere Kindern, kranken Menschen und Senioren nicht zuzumuten. Die Freilauffunktion ermöglicht hier, dass die Schließerfeder nur einmalig vorgespannt wird und bis zum etwaigen Brandfall vorgespannt bleibt. Der vorgestellte Türschließer kann aufgrund der sehr schmalen Baubreite unsichtbar im Türblatt oder in der Zarge eingesetzt werden, was keinerlei optische Beeinträchtigung mit sich bringt und vor Beschädigung durch Vandalismus schützt.

Bevorzugt umfasst der Türschließer eine im Türschließergehäuse zwischen der Kolbenbaugruppe und der Schließerfeder angeordnete fluiddichte Trennwand, wobei die Kolbenstange fluiddicht durch die Trennwand verläuft. Die Trennwand ist gegenüber dem Türschließergehäuse ortsfest und abgedichtet. Zwischen der Kolbenstange und der Trennwand wird bevorzugt eine Gleitringdichtung verwendet.

Des Weiteren umfasst der Türschließer vorteilhafterweise einen im Türschließergehäuse geführten und an der Schließerfeder anliegenden Schließerfederspannkolben. Die Kolbenstange überträgt somit die Kraft von der Kolbenbaugruppe auf den Schließerfederspannkolben. Am Schließerfederspannkolben liegt die Schließerfeder an.

In vorteilhafter Weise ist zwischen der Trennwand und dem Schließerfederspannkolben der Sperrraum ausgebildet. Auf der einen Seite der Trennwand befindet sich somit die Kolbenbaugruppe mit der Abtriebswelle. Die Kolbenstange überträgt die Kräfte durch die Trennwand hindurch auf die andere Seite. Dort sind der Sperrraum, der Schließerfederspannkolben und die Schließerfeder angeordnet.

Für die im Türschließermechanismus enthaltene Freilauffunktion muss die Schließerfeder, auch Energiespeicherfeder genannt, mittels des hydraulischen Sperrraums in vorgespannter Lage gehalten werden, um die sofortige Schließung der Tür nach der manuellen Öffnungsbetätigung zu verhindern. Da die Wirkrichtung der Schließerfeder über die Kolbenbaugruppe auf die Abtriebswelle gerichtet ist, wird bevorzugt der zusätzliche Schließerfederspannkolben eingesetzt, der über die Kolbenstange auf die Kolbenbaugruppe einwirkt. In Verbindung mit der Kolbenstange und der Trennwand entsteht somit der hydraulische Sperrraum zur hydraulischen Arretierung der Schließerfeder. Die Kolbenstange erstreckt sich durch den Sperrraum, wodurch der Sperrraum auch als Ringraum zu bezeichnen ist. An diesem Aufbau des erfindungsgemäßen Türschiebers ist ein entscheidender Unterschied zwischen vorbekannten Türantrieben und dem hier vorgestellten Türschließer gut zu erläutern. Beim vorbekannten Türantrieb wird von einer Hydraulikpumpe aktiv unter Druck gesetztes Ölvolumen in die Druckräume gepumpt und somit über einen Federspannkolben eine Energiespeicherfeder vorgespannt. Im Gegensatz hierzu wird beim vorgestellten Türschließer das dem Hub entsprechende Ölvolumen während des manuellen Öffnungsvorgangs aus anderen Gehäusebereichen in den Sperrraum verdrängt und der Abfluss aus dem Sperrraum wird zum Beispiel über ein Magnetventil gesperrt. Somit wird bei dem hier vorgestellten Türschließer die gespeicherte Kraft der Schließerfeder über den Öldruck aufgenommen und kann nicht über die Kolbenbaugruppe Drehmoment auf die Abtriebswelle einleiten.

In bevorzugter Ausführung ist vorgesehen, dass auf einer der Kolbenstange abgewandten Seite der Kolbenbaugruppe ein Schließdämpfungsraum zwischen dem Türschließergehäuse und der Kolbenbaugruppe ausgebildet ist, und dass vom Sperrraum eine erste hydraulische Leitung, insbesondere eine Druckleitung P, zum Magnetwegeventil führt, vom Schließdämpfungsraum eine zweite hydraulische Leitung, insbesondere eine Arbeitsleitung A, zum Magnetwegeventil führt, und vom Magnetwegeventil eine dritte hydraulische Leitung, insbesondere Tankleitung T, zu einem Tankraum führt. Die hydraulischen Leitungen erstrecken sich bevorzugt im Wesentlichen parallel zur Türschließerlängsachse und sind in das Gehäuse des Türschließers integriert.

Im Folgenden wird die Erfindung anhand der begleitenden Zeichnung genauer erläutert. Dabei zeigt:
- Fig. 1: einen erfindungsgemäßen Türschließer nach einem ersten Ausführungsbeispiel,
- Fig. 2: einen erfindungsgemäßen Türschließer bei geschlossener Türstellung bei 0° Öffnungswinkel mit inaktivem Freilauf für alle Ausführungsbeispiele,
- Fig. 3: einen erfindungsgemäßen Türschließer bei geöffneter Türstellung bei 150° Öffnungswinkel mit inaktivem Freilauf für alle Ausführungsbeispiele,
- Fig. 4: einen erfindungsgemäßen Türschließer bei geschlossener Türstellung bei 0° Öffnungswinkel mit aktiviertem Freilauf für alle Ausführungsbeispiele,
- Fig. 5: einen erfindungsgemäßen Türschließer während des Öffnungsvorgangs mit aktiviertem Freilauf für alle Ausführungsbeispiele,
- Fig. 6: eine Detailansicht des Freilaufs gemäß dem ersten Ausführungsbeispiel,
- Fig. 7: einen erfindungsgemäßen Türschließer nach einem zweiten Ausführungsbeispiel mit inaktivem Freilauf,
- Fig. 8: den erfindungsgemäßen Türschließer nach dem zweiten Ausführungsbeispiel mit aktiviertem Freilauf,
- Fig. 9: eine Kolbenbaugruppe eines erfindungsgemäßen Türschließers nach einem dritten Ausführungsbeispiel,
- Fig. 10: verschiedene Schnittansichten der Kolbenbaugruppe nach dem dritten Ausführungsbeispiel,
- Fig. 11: ein hydraulisches Schaltsymbol für ein Magnetwegeventil eines erfindungsgemäßen Türschließers nach einem vierten Ausführungsbeispiel,
- Fig. 12: ein hydraulisches Schaltsymbol für ein Magnetwegeventil eines erfindungsgemäßen Türschließers nach einem fünften Ausführungsbeispiel,
- Fig. 13: ein hydraulisches Schaltsymbol für ein Magnetwegeventil eines erfindungsgemäßen Türschließers nach einem sechsten Ausführungsbeispiel,
- Fig. 14: das hydraulische 3/2-Magnetwegeventil des Türschließers nach dem fünften Ausführungsbeispiel in unbestromter Stellung,
- Fig. 15: das hydraulische 3/2-Magentwegeventil des Türschließers gemäß dem fünften Ausführungsbeispiel in bestromter Stellung,
- Fig. 16: einen Ausschnitt aus Fig. 15,
- Fig. 17: das hydraulische 3/2-Magnetwegeventil des Türschließers gemäß dem sechsten Ausführungsbeispiel in unbestromter Stellung,
- Fig. 18: einen Ausschnitt aus Fig. 17, und
- Fig. 19: einen erfindungsgemäßen Türschließers nach einem siebten Ausführungsbeispiel.

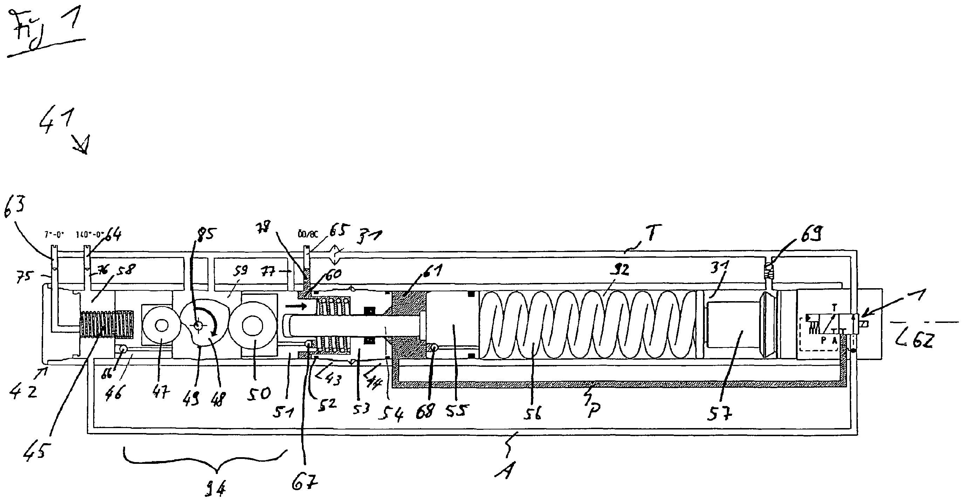

Im Folgenden wird anhand von Fig. 1 der grundlegende Aufbau sowie die Hydrauliksteuerung und die Funktionsweise eines Türschließers 41 gemäß dem ersten Ausführungsbeispiel erläutert.

Der Türschließer 41 erstreckt sich entlang einer Türschließerlängsachse 62. Der Türschließer 41 umfasst ein Türschließergehäuse 42, das sich wiederum aus einem ersten Türschließergehäuseteil 43 und einem zweiten Türschließergehäuseteil 44 zusammensetzt. In Fig. 1 sind die diversen hydraulischen Leitungen außerhalb des Türschließergehäuses 42 dargestellt. Dies dient jedoch nur der Übersichtlichkeit. In der tatsächlichen Ausführung sind die Hydraulikleitungen in das Türschließergehäuse 42 integriert. Im Folgenden wird der Aufbau des Türschließers 41 entlang seiner Türschließerlängsachse 62 von links nach rechts vorgestellt. Eine erste Druckfeder 45 stützt sich gegen das Türschließergehäuse 42, insbesondere gegen eine Stirnseite des ersten Türschließergehäuseteils 43. Die erste Druckfeder 45 belastet eine Kolbenbaugruppe 94 auf Druck. Diese Kolbenbaugruppe 94 ist im Türschließergehäuse 42, insbesondere im ersten Türschließergehäuseteil 43, geführt. Gegenüberliegend der ersten Druckfeder 45 greift eine zweite Druckfeder 52 an der Kolbenbaugruppe 94 an. Diese zweite Druckfeder 52 stützt sich gegen eine Trennwand 53, insbesondere Gehäusetrennwand. Die Trennwand 53 befindet sich an der Schnittstelle zwischen dem ersten Türschließergehäuseteil 43 und dem zweiten Türschließergehäuseteil 44. Die Trennwand 53 stellt einen Flansch zur Verbindung der beiden Gehäuseteile 43, 44 dar und dichtet gleichzeitig die beiden Gehäuseteile 43, 44 voneinander ab. Durch die Trennwand 53 hindurch erstreckt sich eine Kolbenstange 54 entlang der Türschließerlängsachse 62. Die Kolbenstange 54 ist dicht, insbesondere mittels einer Gleitringdichtung, in der Trennwand 53 geführt. Die Kolbenstange 54 ist fest mit einem Schließerfederspannkolben 55 verbunden. Dieser Schließerfederspannkolben 55 ist im Türschließergehäuse 52, insbesondere im zweiten Türschließergehäuseteil 44, geführt. An den Schließerfederspannkolben 55 schließt sich eine Schließerfeder 56 an. Die Schließerfeder 56 stützt sich auf der einen Seite gegen den Schließerfederspannkolben 55 und auf der anderen Seite gegen eine Einstelleinheit 57 für die Schließerfedervorspannung. Im Anschluss an die Einstelleinheit 57 für die Schließerfedervorspannung befindet sich ein 3/2-Magnetwege-ventil 1, ausgebildet als Cartridgeventil, integriert im Türschließergehäuse 42, insbesondere im zweiten Türschließergehäuseteil 44.

Die Kolbenbaugruppe 59 umfasst auf ihrer der ersten Druckfeder 45 zugewandten Seite einen Dämpfungskolben 46 und auf ihrer der Kolbenstange 54 zugewandten Seite einen Öffnungskolben 51. Der Dämpfungskolben 46 umfasst eine in ihm drehbar gelagerte erste Kurvenrolle 47. Der Öffnungskolben 51 umfasst eine in ihm drehbar gelagerte zweite Kurvenrolle 50. Zwischen der ersten Kurvenrolle 47 und der zweiten Kurvenrolle 50 ist eine Abtriebswelle 48, ausgebildet als Nockenwelle, angeordnet. Die Abtriebswelle 48 erstreckt sich entlang einer Abtriebsachse 85senkrecht zur Türschließerlängsachse 62. Diese Abtriebswelle 48 überträgt die Kraft aus der Kolbenbaugruppe 94 zur Tür sowie von der Tür auf die Kolbenbaugruppe 94. Hierzu umfasst die Abtriebswelle 48 eine nockenförmig ausgebildete Abwälzkontur 49. Die erste Kurvenrolle 47 und die zweite Kurvenrolle 50 wälzen auf dieser Abwälzkontur 49 ab. Die Abwälzkontur 49 ist herzförmig ausgestaltet.

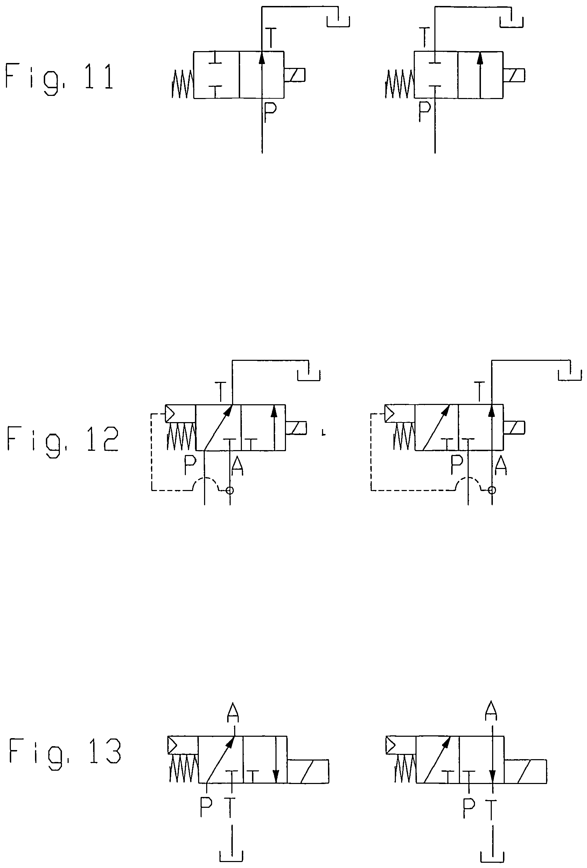

Der Dämpfungskolben 46, der Öffnungskolben 51 und der Schließerfederspannkolben 55 sind dicht innerhalb des Türschließergehäuses 42 geführt und umfassen hierzu bevorzugt an ihrem Umfang Dichtungen oder Dichtflansche. Durch diese dichte Führung der Kolben entstehen im Türschließergehäuse 42 verschiedene Räume bzw. Kammern, die über diverse hydraulische Leitungen miteinander verbunden sind. Diese Kammern bzw. Räume werden wiederum gemäß dem in Fig. 1 gezeigten Aufbau von links nach rechts entlang der Türschließerlängsachse 62 vorgestellt: Definiert durch das linke Stirnende des Türschließergehäuses 42, insbesondere des ersten Türschließergehäuseteils 43, und den Dämpfungskolben 46, ist ein Schließdämpfungsraum 58 ausgebildet. Zwischen dem Dämpfungskolben 46 und dem Öffnungskolben 51 befindet sich ein Kolbenbaugruppeninnenraum 59. Dieser kann auch als Nockenwellenraum bezeichnet werden. Der Kolbenbaugruppeninnenraum 59 ist beidseitig durch den Dämpfungskolben 46 und den Öffnungskolben 51 abgedichtet und befindet sich stets auf Tankdruckniveau. Zwischen dem Öffnungskolben 51 und der Trennwand 53 befindet sich ein Öffnungsdämpfungsraum 60. Auf der anderen Seite der Trennwand 53 befindet sich zwischen der Trennwand 53 und dem Schließerfederspannkolben 55 der Sperrraum 61. Der Sperrraum 61 ist definiert durch die Trennwand 53, die Wandung des zweiten Türschließergehäuseteils 44 und den Schließerfederspannkolben 55. Des Weiteren umfasst der Türschließer 41 einen Tankraum 31. Der Tankraum 31 befindet sich beispielsweise in der Einstelleinheit 57 für die Schließerfedervorspannung. Anhand der Fig. 11 bis 18 wird später eine genaue Ausbildung des Magnetwegeventils 1 dargestellt. Hierbei wird auch die spezielle konstruktive Ausführung eines bevorzugten Tankraums 31 beschrieben. Insbesondere kann auch ein Schließerfederaufnahmeraum 92 und/oder der Kolbenbaugruppeninnenraum 59 mittels ungedrosselter Verbindungen zum Tankraum 31 als Tank mitgenutzt werden.

Der Türschließer 41 umfasst des Weiteren eine erste hydraulische Leitung, ausgebildet als Druckleitung P, eine zweite hydraulische Leitung, ausgebildet als Arbeitsleitung A, und eine dritte hydraulische Leitung, ausgebildet als Tankleitung T. Die drei hydraulischen Leitungen verlaufen parallel zur Türschließerlängsachse 62 im Türschließergehäuse 42. Über kurze, radial bzw. senkrecht zur Türschließerlängsachse 62 verlaufende Kanäle sind die drei hydraulischen Leitungen mit den verschiedenen Kammern bzw. Räumen im Türschließer 41 verbunden. Fig. 1 zeigt die hydraulischen Leitungen nur schematisch. Tatsächlich sind die hydraulischen Leitungen in das Türschließergehäuse 42 integriert. Die Druckleitung P führt vom Sperrraum 61 direkt und ungedrosselt zum Magnetwegeventil 1. Die Arbeitsleitung A führt vom Schließdämpfungsraum 58 direkt und ungedrosselt zum Magnetwegeventil 1. Das Magnetwegeventil 1 ist ferner mit der Tankleitung T verbunden. Die Beschreibung als direkt und ungedrosselt bedeutet, dass keine separaten Drosseln in den Leitungen vorgesehen sind. Nichtsdestotrotz kann der Druck jedoch über etwaige Filter sowie dynamische Druckunterschiede leicht gedrosselt sein.

Der Öffnungsdämpfungsraum 60 ist über eine erste gedrosselte Verbindung 78 mit der Tankleitung T verbunden. Hierzu ist ein erstes Drosselventil 65 eingesetzt. Darüber hinaus besteht zwischen dem Öffnungsdämpfungsraum 60 und der Tankleitung T eine erste ungedrosselte Verbindung 77. Die Öffnung des Öffnungsdämpfungsraums 60 in die erste ungedrosselte Verbindung 77 befindet sich näher an der Abtriebswelle 48 als die Öffnung des Öffnungsdämpfungsraums 60 in die erste gedrosselte Verbindung 78. Dadurch kann nach einem bestimmten Öffnungswinkel der Tür die ungedrosselte Verbindung 77 durch den Öffnungskolben 51 verschlossen werden.

Der Schließdämpfungsraum 58 ist über eine zweite gedrosselte Verbindung 75, die an der Stirnseite des ersten Türschließergehäuseteils 43 ansetzt, mit der Tankleitung T verbunden. Hierzu ist ein zweites Drosselventil 63 eingesetzt. Des Weiteren befindet sich in der Mantelfläche des Türschließergehäuses 42 eine dritte gedrosselte Verbindung 46 zwischen dem Schließdämpfungsraum 58 und der Tankleitung T mit einem dritten Drosselventil 64. Der Kolbenbaugruppeninnenraum 59 ist über zumindest einen radialen Kanal mit der Tankleitung T ungedrosselt verbunden. In der Tankleitung T ist ein Filter 31 eingezeichnet. Die Position des Filters 31 ist hier rein beispielhaft. So kann beispielsweise der Filter 31 auch im Magnetventil 1 integriert sein. Es können sich auch bevorzugt weitere Filter 31 in den anderen hydraulischen Leitungen befinden.

Im Dämpfungskolben 46 ist ein erstes Rückschlagventil 66 eingebaut. Dieses sperrt in Richtung des Kolbenbaugruppeninnenraums 59. Im Schließerkolben 51 ist ein zweites Rückschlagventil 67 eingebaut. Dieses sperrt ebenfalls in Richtung des Kolbenbaugruppeninnenraums 59. Im Schließerfederspannkolben 55 ist ein drittes Rückschlagventil 68 vorgesehen. Dieses ermöglicht Hydraulikfluss in Richtung des Sperrraumes 61. Zwischen dem Tankraum 31 und der Tankleitung T ist ein viertes Rückschlagventil 69 vorgesehen. Dieses Rückschlagventil ist federbelastet und sperrt in Richtung der Tankleitung T. Durch das erste, zweite und dritte Rückschlagventil 66, 67 und 68 können sich der Schließdämpfungsraum 58, der Öffnungsdämpfungsraum 60 und der Sperrraum 61 bei Expansion stets mit Hydrauliköl aus dem Tankvolumen füllen.

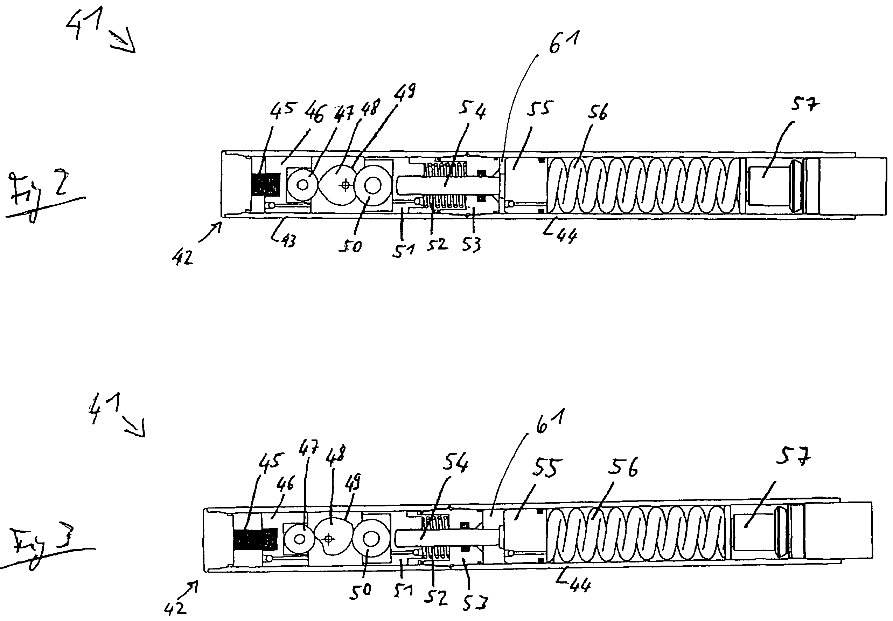

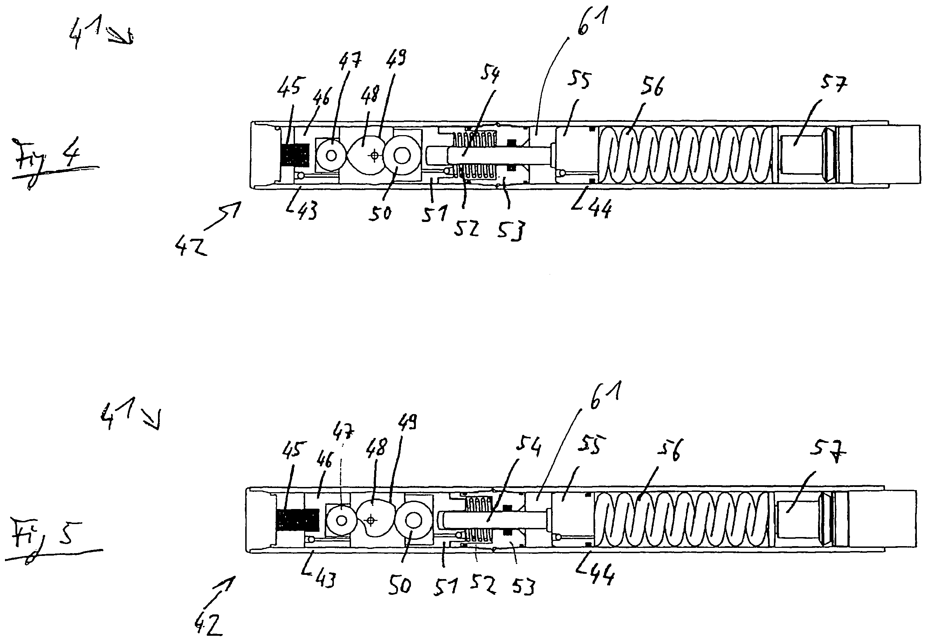

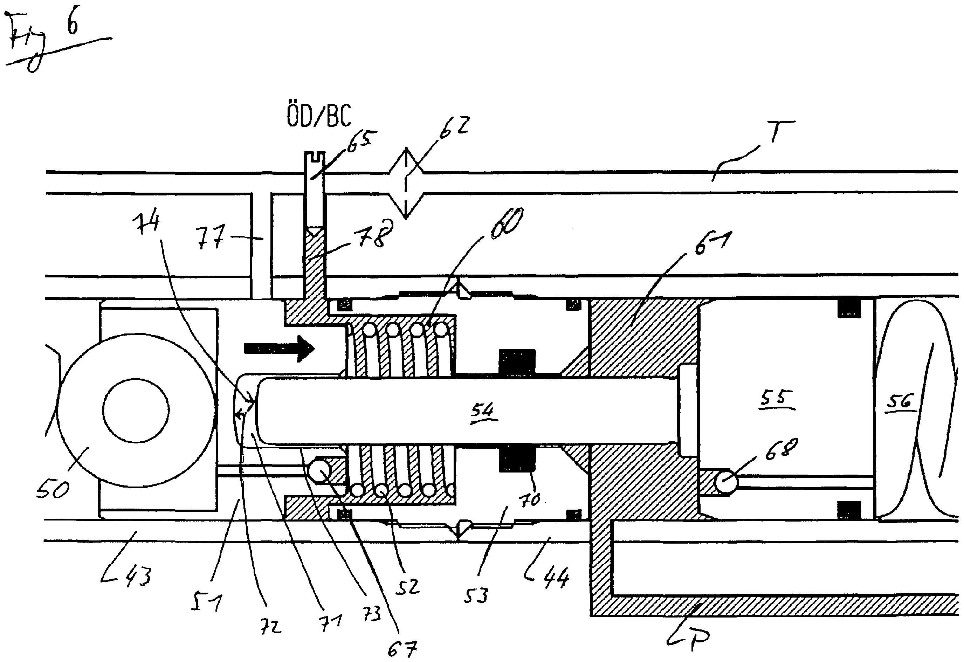

Zwischen der Kolbenstange 54 und dem Öffnungskolben 51 ist eine Freilaufanordnung ausgebildet. Die konstruktive Ausgestaltung dieser Freilaufanordnung wird in Fig. 6 genauer erläutert. Zunächst wird jedoch anhand der Fig. 2 bis 5 der Funktions- und Bewegungsablauf des Türschließers 41 genauer erläutert. Der Funktions- und Bewegungsablauf des Türschließers 41 gemäß den Fig. 2 bis 5 gilt für alle hier vorgestellten Ausführungsbeispiele. Fig. 2 zeigt den Türschließer 41 bei 0° Winkelstellung mit entspannter Schließerfeder. Fig. 2 zeigt somit die Ausgangsstellung des Türschließers 41. Fig. 3 zeigt den Türschließer während des Öffnungsvorgangs bei einer Winkelstellung von 150°. Die Tür wird hierbei durch eine Person geöffnet. Dadurch rotiert die Abtriebswelle 48. Über die Abwälzkontur 49 überträgt sich die Kraft auf die Kurvenrollen 47, 50. Dies bewirkt eine translatorische Bewegung der Kolbenbaugruppe 94 nach rechts. Mit der Kolbenbaugruppe 94 wird auch die Kolbenstange 54 und somit der Schließerfederspannkolben 55 nach rechts bewegt. Dadurch spannt sich die Schließerfeder 56 vor. Während dieses Öffnungsvorganges ist die Druckleitung P mittels des Magnetwegeventils 1 verschlossen. Über das dritte Rückschlagventil 68 wird Hydraulikflüssigkeit in den Sperrraum 61 gedrückt. Der in Fig. 3 dargestellte Öffnungsvorgang dient zum Spannen der Schließerfeder 56. Nach dem Spannen der Schließerfeder 56 und unter Beibehaltung der verschlossenen Druckleitung P ist die Freilauffunktion des Türschließers 41 aktiv. Fig. 4 zeigt den Türschließer 41 wieder in geschlossener Stellung bei einem Türwinkel von 0°. Wie hier gut zu sehen ist, verbleibt die Schließerfeder 56 in der gespannten Stellung, da der Sperrraum 61 mit Hydrauliköl gefüllt bleibt. Zusammen mit dem Schließerfederspannkolben 55 bleibt auch die Kolbenstange 54 unbeweglich. Die Kolbenbaugruppe 94 hebt dank der Freilaufanordnung von der Kolbenstange 54 ab. Die Kolbenbaugruppe 94 ist hier zusammen mit der Tür frei beweglich. Lediglich über die beiden Druckfedern 45, 52 wird eine leichte Kraft auf die Kolbenbaugruppe 94 übertragen. Wie Fig. 5 zeigt, verbleibt während der Freilauffunktion die Schließerfeder 56 in ihrer gespannten und arretierten Position. Die Tür ist währenddessen frei beweglich.

Fig. 6 zeigt eine Detailansicht des Freilaufs gemäß dem ersten Ausführungsbeispiel. Die Freilaufanordnung ist hier als Verschiebekupplung ausgeführt. Die beiden wesentlichen Bestandteile dieser Freilaufanordnung sind die erste Stirnfläche 74 und die zweite Stirnfläche 72. Die erste Stirnfläche 74 ist parallel zur zweiten Stirnfläche 72. Beide Stirnflächen 74, 72 stehen senkrecht zur Türschließerlängsachse 62. Die erste Stirnfläche 74 ist eine Stirnfläche der Kolbenstange 54. Die zweite Stirnfläche 72 befindet sich an der Kolbenbaugruppe 94, insbesondere am Öffnungskolben 71. In der in Fig. 6 dargestellten Ausführung ist in den Öffnungskolben 51 eine Tasche 71 eingearbeitet. In diese Tasche 71 greift ein Teil der Kolbenstange 54 ein und ist darin entlang der Kolbenführung 73 geführt. Die zweite Stirnfläche 72 ist als Boden der Tasche 71 ausgebildet. Die beiden Stirnflächen 74, 72 stehen sich somit in der Tasche 71 gegenüber und können im Falle des Freilaufs voneinander abheben.

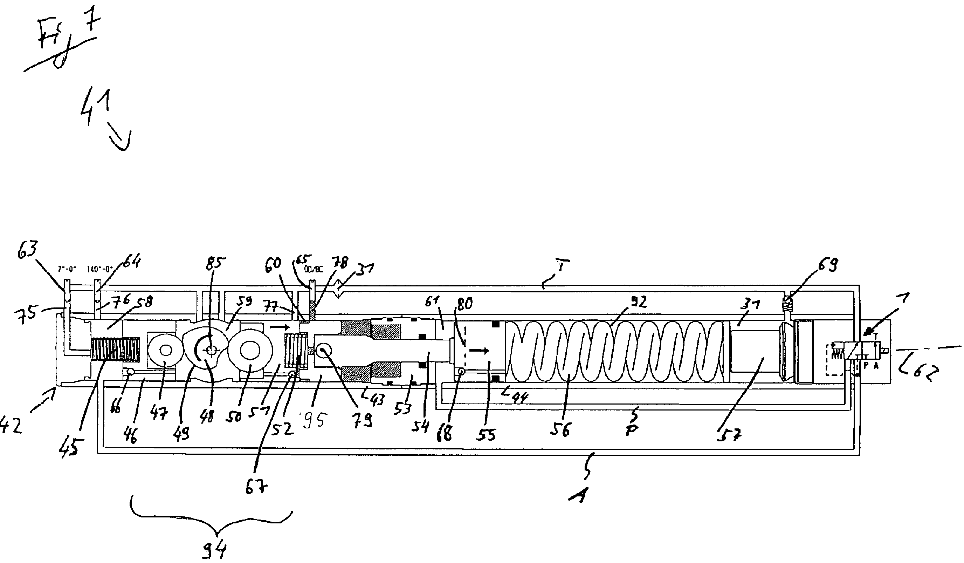

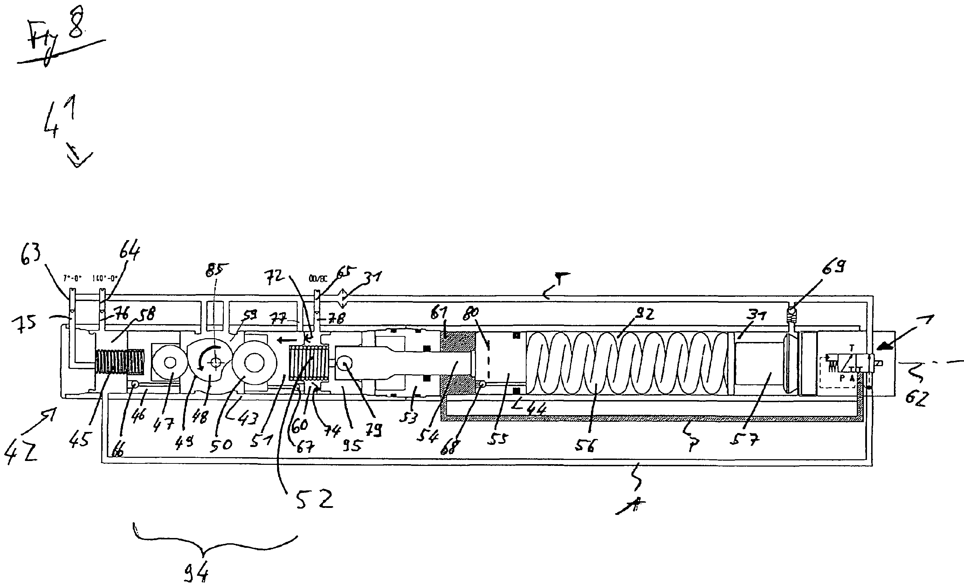

Die Fig. 7 und 8 zeigen einen Türschließer 41 gemäß einem zweiten Ausführungsbeispiel. Gleiche bzw. funktional gleiche Bauteile sind in allen Ausführungsbeispielen mit den gleichen Bezugszeichen versehen. Fig. 7 zeigt einen Türschließer 41 während des Vorspannens der Schließerfeder 56. In Fig. 8 ist der Sperrraum 61 hydraulisch über die Druckleitung P blockiert. Dadurch verbleibt der Schließerfederspannkolben 55 und die Schließerfeder 56 in gespannter Position. Die Kolbenbaugruppe 94 und die Tür sind im Freilauf beweglich.

Das zweite Ausführungsbeispiel entspricht dem ersten Ausführungsbeispiel bis auf die im Folgenden beschriebenen Unterschiede: Im Unterschied zum ersten Ausführungsbeispiel ist im zweiten Ausführungsbeispiel ein Zusatzkolben 95 zwischen der Trennwand 53 und der Kolbenbaugruppe 94, insbesondere dem Öffnungskolben 51, angeordnet. Der Zusatzkolben 95 ist zur Übertragung translatorischer Bewegung fest mit der Kolbenstange 54 verbunden. Die erste Stirnfläche 74 ist stirnseitig am Zusatzkolben 95 ausgebildet. Der Zusatzkolben 95 umfasst einen Durchlass, sodass sowohl der Raum zwischen Zusatzkolben 95 und Kolbenbaugruppe 94 sowie der Raum zwischen Zusatzkolben 95 und Trennwand 53 den Öffnungsdämpfungsraum 60 bilden. Ein weiterer Unterschied zwischen dem ersten und zweiten Ausführungsbeispiel ist, dass im zweiten Ausführungsbeispiel die Kolbenstange 54 schwenkbar mit dem Zusatzkolben 95 und dem Schließerfederspannkolben 55 verbunden ist. Die Verbindung zwischen der Kolbenstange 54 und dem Zusatzkolben 95 ist um eine erste Achse 79 schwenkbar. Die Verbindung zwischen der Kolbenstange 54 und dem Schließerfederspannkolben 55 ist um eine zweite Achse 80 schwenkbar. Die beiden Achsen 79, 80 stehen beide senkrecht zur Türschließerlängsachse 62. Darüber hinaus steht die erste Achse 79 senkrecht zur zweiten Achse 80. Diese schwenkbare Anbindung der Kolbenstange 54 verhindert bei Auftreten von Kräften, die nicht parallel zur Türschließerlängsachse 62 verlaufen, ein Verklemmen der Anordnung.

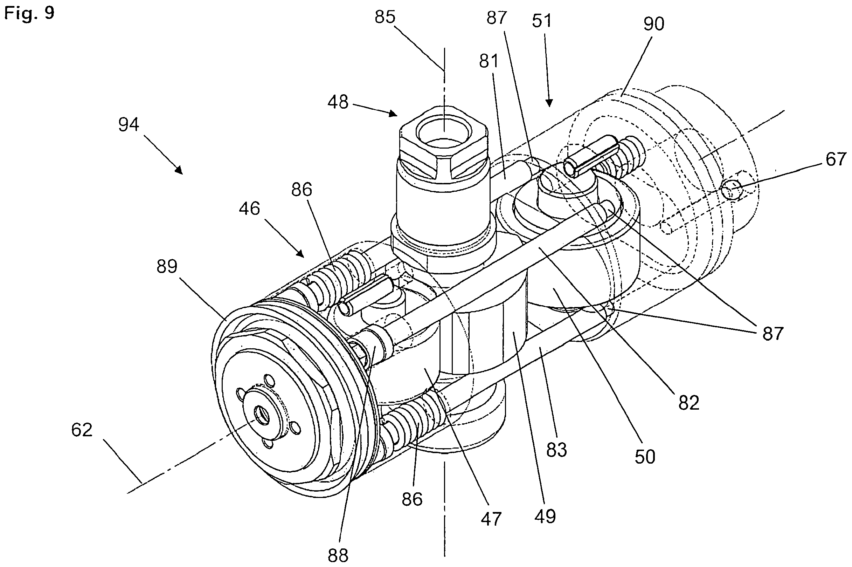

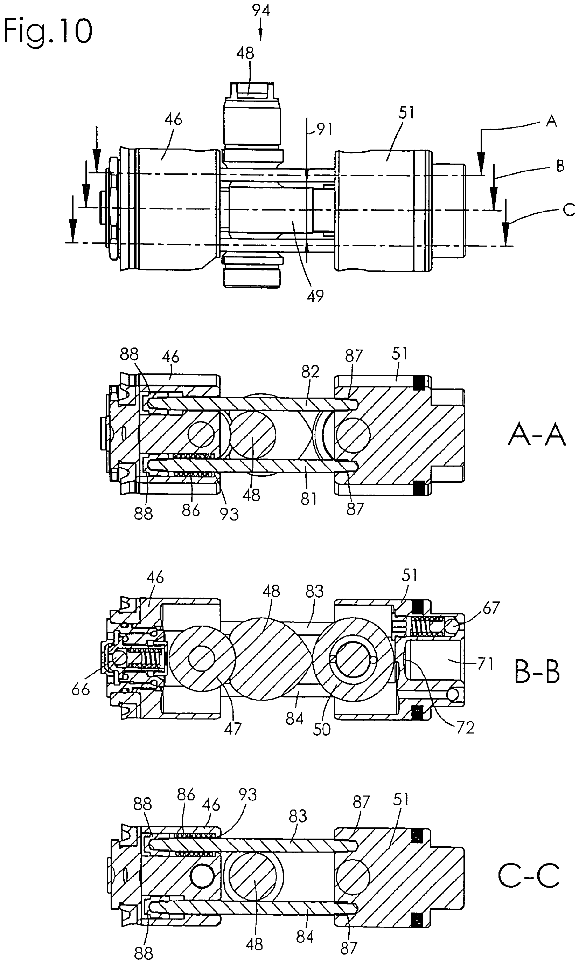

Die Fig. 9 und 10 zeigen eine Kolbenbaugruppe 94 des Türschließers 41 gemäß einem dritten Ausführungsbeispiel. Gleiche bzw. funktional gleiche Bauteile sind in allen Ausführungsbeispielen mit den gleichen Bezugszeichen versehen. Die Kolbenbaugruppe 94 aus dem dritten Ausführungsbeispiel kann bevorzugt in den Türschließern 41 nach allen hier vorgestellten Ausführungsbeispielen angewandt werden.

Die in den Fig. 9 und 10 vorgestellte Kolbenbaugruppe 94 ersetzt die Kolbenbaugruppe 94 aus den Fig. 1 bis 7, dabei insbesondere den Dämpfungskolben 46 mit der ersten Kurvenscheibe 47 und den Öffnungskolben 51 mit der zweiten Kurvenscheibe 50. Die Abtriebswelle 48 bleibt unverändert. Durch die Verwendung der Kolbenbaugruppe 94 gemäß dem dritten Ausführungsbeispiel sind die erste Druckfeder 45 und die zweite Druckfeder 52 nicht mehr nötig, können jedoch trotzdem zusätzlich verwendet werden.

Fig. 9 zeigt die Kolbenbaugruppe 94, wobei der Dämpfungskolben 46 und der Öffnungskolben 51 mittels einer ersten Zugstange 81, einer zweiten Zugstange 82, einer dritten Zugstange 83 und einer vierten Zugstange 84 miteinander verbunden sind. Die vier Zugstangen 81-84 sind parallel zur Türschließerlängsachse 62 angeordnet. Darüber hinaus befinden sich die vier Zugstangen 81-84 an vier Ecken eines rein zu Erklärungszwecken vorzustellenden Quadrates. Die Abtriebsachse 85 der Abtriebswelle 48 verläuft durch den Schnittpunkt der Diagonalen dieses Quadrates. Durch diese spezielle Anordnung der vier Zugstangen 81-84 kann die volle Höhe 91 (siehe Fig. 10) der Abwälzkontur 49 zwischen den beiden oben angeordneten Zugstangen 81, 82 und den beiden unten angeordneten Zugstangen 83, 84 angeordnet werden. Die Höhe 91 der Abwälzkontur 49 definiert sich dabei in Richtung der Abtriebsachse 85. Die Abwälzkontur 49 bedarf keiner Aussparungen für die Zugstangen 81-84 und kann somit optimal belastet werden.

Die vier Zugstangen 81-84 sind jeweils über Verschraubungen 87 fest mit dem Öffnungskolben 51 verbunden. An ihrem anderen Ende ragen die vier Zugstangen 81-84 jeweils in Durchgangsbohrungen des Dämpfungskolbens 46. Hier sind die Enden der Zugstangen 81-84 jeweils mit einer Federspannmutter 88 verschraubt. Die erste Zugstange 81 und die zur ersten Zugstange 81 diagonal angeordnete dritte Zugstange 83 sind jeweils mit einer integrierten Spielausgleichsfeder 86 auf Zug belastet. Die integrierten Spielausgleichsfedern 86 stecken auf der ersten Zugstange 81 bzw. dritten Zugstange 83 und befinden sich im Dämpfungskolben 46. Ein erstes, der Abtriebswelle 48 abgewandtes Ende der Spielausgleichsfedern 86 stützt sich gegen die Federspannmutter 88, welche mit der entsprechenden Zugstange 81, 83 verschraubt ist. Ein zweites, der Abtriebswelle 48 zugewandtes Ende der jeweiligen Spielausgleichsfeder 86 stützt sich gegen einen Absatz 93 (siehe Fig. 10), ausgebildet im Dämpfungskolben 46. Durch diese spezielle Anordnung können die Spielausgleichsfedern 86, welche als Druckfedern ausgebildet sind, die erste und dritte Zugstange 81, 83 auf Zug belasten.

Darüber hinaus zeigt Fig. 9 einen ersten Abdichtungsflansch 89 am Dämpfungskolben 46, welcher den Dämpfungskolben 46 gegenüber dem Türschließergehäuse 42 abdichtet. In ähnlicher Weise ist der Öffnungskolben 51 mittels eines zweiten Abdichtungsflansches 90 gegenüber dem Türschließergehäuse 42 abgedichtet. Diese beiden Abdichtungsflansche 89, 90 finden in den Kolbenbaugruppen 94 aller Ausführungsbeispiele Anwendung.

Fig. 10 zeigt drei Schnittansichten der Kolbenbaugruppe 94 gemäß dem dritten Ausführungsbeispiel. Im Schnitt B-B ist zu erkennen, dass hier wiederum die Tasche 71 im Öffnungskolben 51 ausgebildet ist. Am Boden dieser Tasche befindet sich die zweite Stirnfläche 72. In diese Tasche 71 greift die Kolbenstange 54 ein, sodass die Freilauffunktion gewährleistet ist.

Die bisher vorgestellten Ausführungsbeispiele zeigen zwei grundlegende Möglichkeiten zum Spielausgleich zwischen den Kurvenrollen 47, 50 und der Abwälzkontur 49. In den ersten beiden Ausführungsbeispielen wird der Dämpfungskolben 46 durch die erste Druckfeder 45 leicht in Richtung der Abtriebswelle 48 druckbelastet. Der Öffnungskolben 51 wird mit der zweiten Druckfeder 52 leicht in Richtung der Abtriebswelle 48 druckbelastet. Dies gewährleistet einen steten Kontakt zwischen Kurvenrollen 47, 50 und der Abwälzkontur 49. Eine Alternative hierzu zeigt das dritte Ausführungsbeispiel. Hier ist der Spielausgleich in die Kolbenbaugruppe 94 integriert. Durch die Zugstangen 81-84 und die integrierten Spielausgleichsfedern 89 werden der Dämpfungskolben 46 und der Öffnungskolben 51 stets leicht zusammengezogen, sodass die beiden Kurvenrollen 47, 50 stets an der Abwälzkontur 49 anliegen. Besonders vorteilhaft ist hier, dass keinerlei Moment auf die Kolbenbaugruppe 94 wirkt und somit im Freilauf die Tür in jeder beliebigen Position stehen bleibt. Die symmetrische und diagonale Anordnung der vier Zugstangen 81-84 dient zur absolut gleichmäßigen Kraftübertragung und verhindert somit jegliches Verkanten. Deshalb sind auch die beiden verwendeten Spielausgleichsfedern 46 an zwei zueinander diagonalen Zugstangen 81, 83 angeordnet. Alternativ hierzu könnte auch an jeder der Zugstangen 81-84 eine Spielausgleichsfeder 86 vorgesehen sein. Selbstverständlich können die Spielausgleichsfedern 86 bevorzugt alle oder teilweise auch im Öffnungskolben 51 angeordnet werden. Darüber hinaus verhindern die Zugstangen 81-84 ein Verdrehen von Dämpfungskolben 46 und Öffnungskolben 51 zueinander.

Ferner kann die Kolbenbaugruppe 94 gemäß dem dritten Ausführungsbeispiel auch zusammen mit der ersten Druckfeder 45 und/oder der zweiten Druckfeder 52 bevorzugt angewendet werden. Ein besonderer Anwendungsfall ergibt sich beispielsweise bei sehr schweren Brandschutztüren. Die für den Brandfall benötigte Schließkraft bedingt sehr starke Schließerfedern 56. So ist es für das alltägliche Begehen der Türe wünschenswert, dass die Schließerfeder 56 stets vorgespannt bleibt und beispielsweise im Brandfall die Türe schließt. Nichtsdestotrotz besteht der Bedarf nach einer leichtgängigen und selbstständig schließenden Türe, wobei dieses leichte Schließen nach jeder Begehung erfolgen sollte. Deshalb ist es bevorzugt, dass man in jedem den hier vorgestellten Türschließer 41 die zweite Druckfeder 52 als "zusätzliche Schließerfeder", ausgelegt nach EN1 oder EN2, ausführt, wobei diese zusätzlicher Schließerfeder bzw. zweite Druckfeder 52 sehr viel schwächer ist als die Schließerfeder 56. Die zweite Druckfeder 52 in dieser Ausführungsvariante belastet somit selbst im Freilauf und bei blockierter Schließerfeder 56 die Kolbenbaugruppe 94, insbesondere den Öffnungskolben 51, stets leicht in Schließrichtung, sodass die Tür selbst bei Freilauf, zumindest bei nicht so großem Widerstand, selbsttätig schließt. Der Begeher muss aber trotz allem nicht bei jedem Öffnungsvorgang die große Schließerfeder 56, sondern nur die sehr leicht ausgeführte zweite Druckfeder 52 spannen. Insbesondere bei dieser Ausführungsvariante kann bevorzugt die Kolbenbaugruppe 94 gemäß den Fig. 9 und 10 nach dem dritten Ausführungsbeispiel mit der zweiten Druckfeder 52 kombiniert werden.

Die Fig. 11, 12, und 13 zeigen ein viertes, fünftes und sechstes Ausführungsbeispiel für einen Türschließer 41, wobei hier jeweils das Schaltsymbol für das Magnetwegeventil 1 dargestellt ist. Fig. 12 mit dem fünften Ausgangsbeispiel zeigt hier die bevorzugte Ausführungsvariante.

Das vierte Ausführungsbeispiel nach Fig. 11 zeigt eine sehr einfache Ausführung, wobei in einem solchen Türschließer 41 die Arbeitsleitung A zum Schließdämpfungsraum 58 eingespart wird. Das Magnetwegeventil 1 steuert hier lediglich eine Verbindung der Druckleitung P aus dem Sperrraum 61 zur Tankleitung T. Die Druckleitung P kann alternativ offen oder geschlossen sein, sodass der Freilauf wahlweise deaktiviert oder aktiviert ist.

Fig. 12 zeigt das Schaltsymbol für das fünfte Ausführungsbeispiel. Hier ist in einem links dargestelltem unbestromten Zustand des Magnetwegeventils 1 die Druckleitung P mit der Tankleitung T verbunden. Die Arbeitsleitung A ist gesperrt. Die rechts dargestellte Schaltstellung zeigt den bestromten Zustand des Magnetwegeventils 1. Hier sind die Druckleitung P und somit der Sperrraum 61 und infolgedessen auch die Schließerfeder 56 gesperrt. Der Schließdämpfungsraum 58 ist über die Arbeitsleitung A mit dem Tank kurzgeschlossen.

Fig. 13 zeigt das Schaltsymbol für das sechste Ausführungsbeispiel. Gemäß der linken Darstellung ist im unbestromten Zustand die Druckleitung P mit der Arbeitsleitung A verbunden. Im bestromten Zustand gemäß der rechten Darstellung sind die Druckleitung P und somit der Sperrraum 61 blockiert. Die Arbeitsleitung A und infolgedessen der Schließdämpfungsraum 58 ist mit der Tankleitung T kurzgeschlossen.

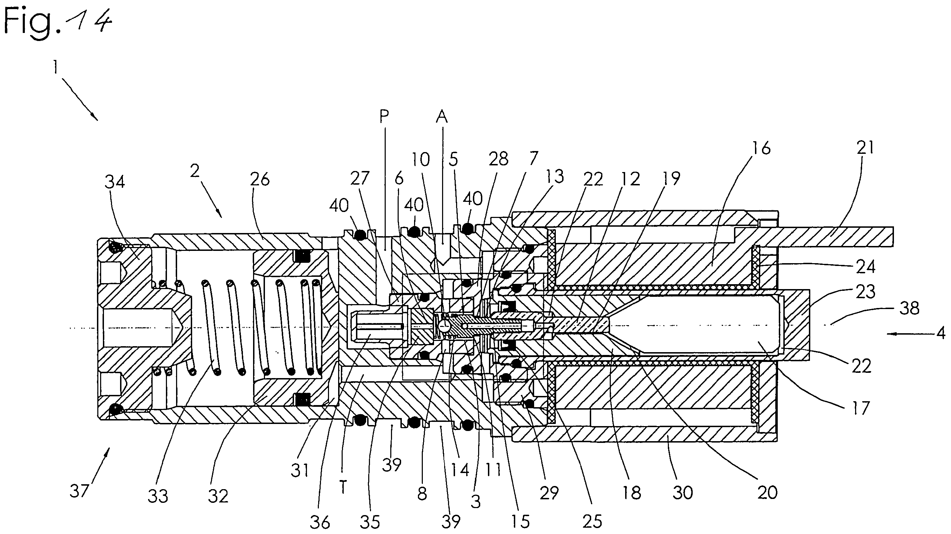

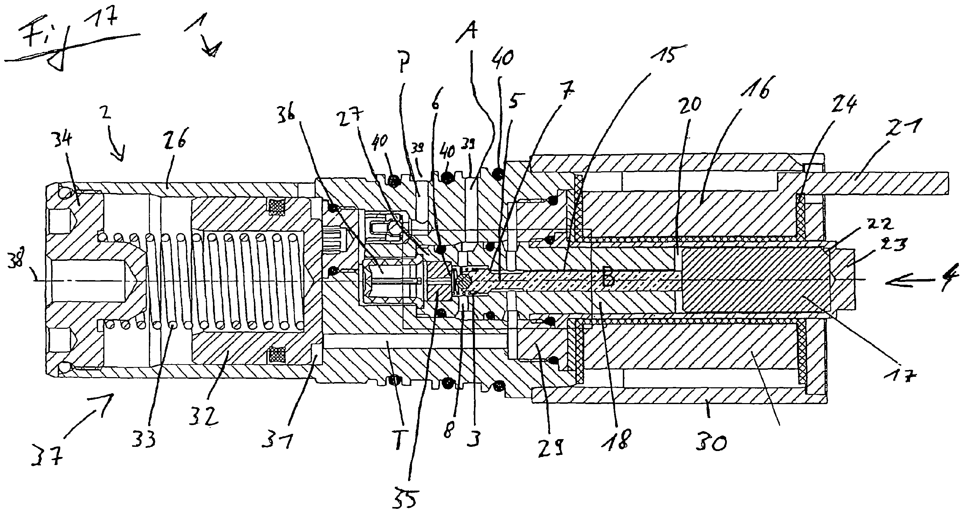

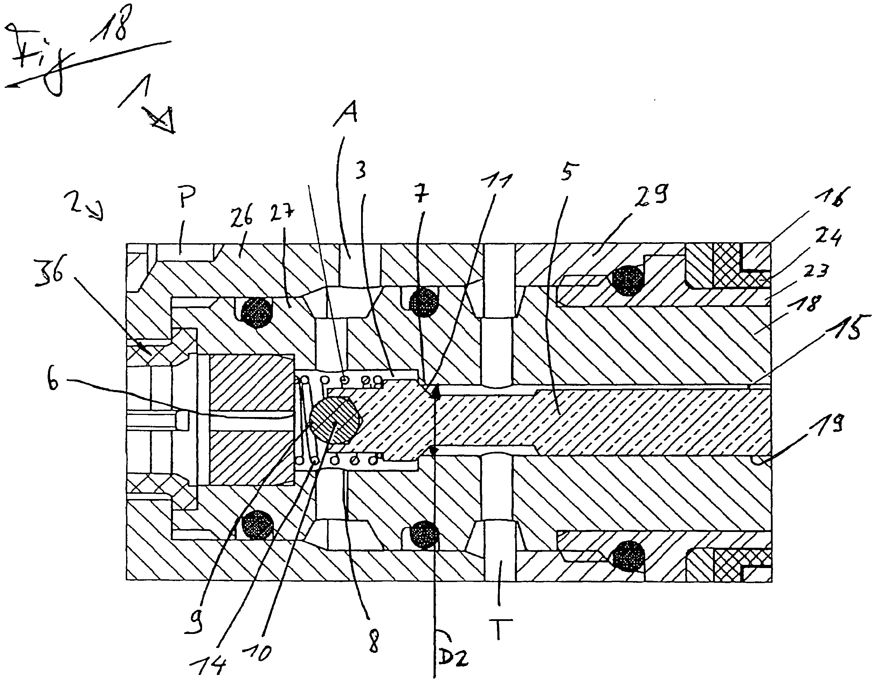

Die Fig. 14 bis 16 zeigen nun die konstruktive Ausgestaltung des Magnetwegeventils 1 gemäß dem Türschließer 41 nach dem fünften Ausgangsbeispiel. Daraufhin wird anhand der Fig. 17 und 18 eine konstruktive Ausgestaltung des Magnetwegeventils 1 für einen Türschließer 41 gemäß dem sechsten Ausführungsbeispiel vorgestellt.

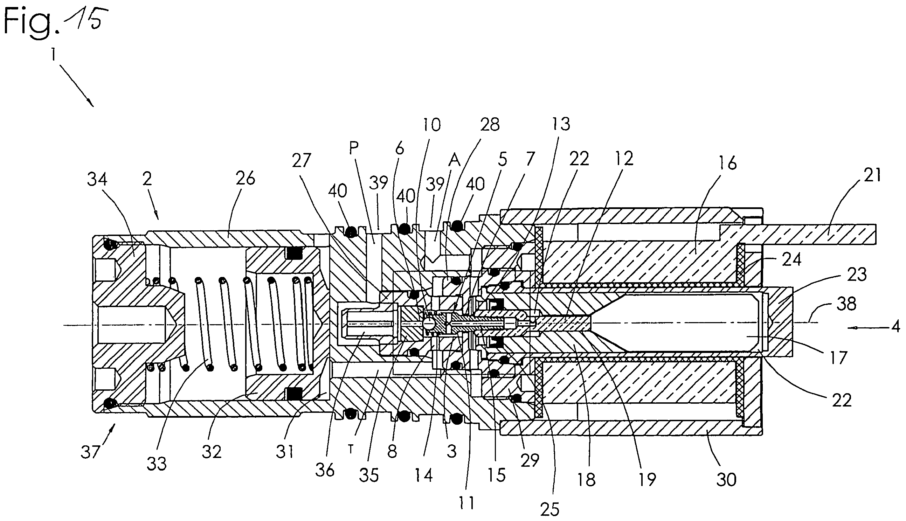

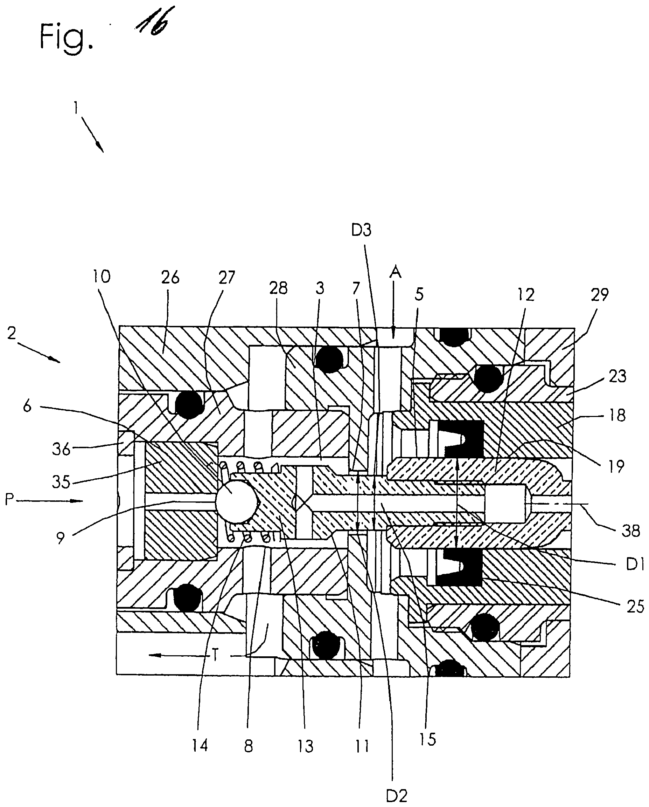

Anhand der Fig. 14 wird die Schaltstellung gemäß Fig. 12 auf der linken Seite gezeigt. Die Fig. 15 und 16 zeigen die Schaltstellung gemäß dem rechts dargestellten Symbol in Fig. 12.

Fig. 14 zeigt einen Schnitt durch das hydraulische 3/2-Magnetwegeventil im unbestromten Zustand. Das hydraulische 3/2-Magnetwegeventil 1 umfasst ein Ventilgehäuse 2, eine in das Ventilgehäuse 2 integrierte Ventilkammer 3, einen Elektromagneten 4 und einen Ventilstößel 5. Der Ventilstößel 5 bewegt sich in Längsrichtung entlang einer Ventilachse 38.

Die Ventilkammer 3 umfasst eine erste Ventilsitzbohrung 6 als Verbindung der Druckleitung P zur Ventilkammer 3 und eine zweite Ventilsitzbohrung 7 als Verbindung der Arbeitsleitung A zur Ventilkammer 3. Ferner ist an der Ventilkammer 3 eine freie Öffnung 8 zur Tankleitung T ausgebildet. Die erste Ventilsitzbohrung 6 liegt der zweiten Ventilsitzbohrung 7 direkt gegenüber. Die freie Öffnung 8 ist ebenfalls als Bohrung ausgeführt, wobei die Bohrung der freien Öffnung 8 senkrecht zur ersten Ventilsitzbohrung 6 und zur zweiten Ventilsitzbohrung 7 steht. Darüber hinaus ist ein Durchmesser der ersten Ventilsitzbohrung 6 wesentlich kleiner ausgeführt als ein Durchmesser der zweiten Ventilsitzbohrung 7.

Der Ventilstößel 5 ist zweiteilig aufgebaut und umfasst einen ersten Teil 12 und einen in den ersten Teil 12 eingeschraubten und somit mit dem ersten Teil 12 fest verbundenen zweiten Teil 13. Der zweite Teil 13 erstreckt sich vom Inneren der Ventilkammer 3 durch die zweite Ventilsitzbohrung 7 hindurch in Richtung des Elektromagneten 4. Der erste Teil 12 liegt komplett außerhalb der Ventilkammer 3.

Der zweite Teil 13 des Ventilstößels 5 umfasst auf seiner der ersten Ventilsitzbohrung 6 zugewandten Seite eine erste Dichtfläche, ausgebildet als konvexe Oberfläche 9 (siehe insbesondere Fig. 16). Diese konvexe Oberfläche 9 wird gebildet durch eine Kugel 10. Die Kugel 10 wiederum ist in einer stirnseitigen Ausnehmung des Ventilstößels 5, insbesondere des zweiten Teils 13, eingebettet. Des Weiteren ist am Ventilstößel 5, insbesondere am zweiten Teil 13, ein Absatz ausgebildet. Auf diesem Absatz stützt sich eine Ventildruckfeder 14 ab. Die konvexe Oberfläche 9 befindet sich innerhalb dieser Ventildruckfeder 14. Die Ventildruckfeder 14 stützt sich des Weiteren an der Stirnfläche der ersten Ventilsitzbohrung 6 ab. Diese Stirnfläche kann auch als Dichtfläche oder Seitenfläche der ersten Ventilsitzbohrung 6 bezeichnet werden. Durch diese Anordnung der Ventildruckfeder 14 ist der Ventilstößel 5 in Richtung des Elektromagneten 4 belastet. Im unbestromten Zustand führt dies zu einer Öffnung der ersten Ventilsitzbohrung 6.

An der zweiten Ventilsitzbohrung 7 umfasst der Ventilstößel 5, insbesondere der zweite Teil 13, innerhalb der Ventilkammer 3 eine zweite Dichtfläche, ausgebildet als Kegelringfläche 11. Diese Kegelringfläche 11 ist um den gesamten Umfang des Ventilstößels 5 ausgebildet. Im unbestromten Zustand des Elektromagneten 4 wird diese Kegelringfläche 11 auf die zweite Ventilsitzbohrung 7 gedrückt und dichtet somit die Arbeitsleitung A gegenüber der Ventilkammer 3 ab.

Der Elektromagnet 4 umfasst eine Spule 16, einen Anker 17 und einen Polkern 18. Die Spule 16 ist um den Anker 17 und um den Polkern 18 gewickelt. Der Anker 17 und der Polkern 18 sind entlang der Ventillängsachse 38 hintereinander angeordnet. Im Polkern 18 befindet sich eine Bohrung entlang der Ventillängsachse 38. Diese Bohrung bildet eine lineare Führung 19 für zumindest einen Teil des Ventilstößels 5, insbesondere einen Anteil des ersten Teils 12 des Ventilstößels 5. Zwischen dem Polkern 18 und dem Anker 17 befindet sich im bestromten Zustand ein möglichst kleiner Spalt 20. Im unbestromten Zustand ist der Spalt 20 größer. Der Elektromagnet 4 umfasst des Weiteren eine Anschlussleitung bzw. Spannungsversorgung 21 zum Anschluss einer Steuerung/Regelung an das hydraulische 3/2-Magnetwegeventil 1. Der Anker 17 und der Polkern 18 sind in eine Hülse 23 eingebettet. Ferner befindet sich eine Isolierung 24 zwischen der Hülse 23 und der Spule 16.

Der Polkern 18 und der Anker 17 befinden sich in einem sogenannten Ankerraum 22. Dieser Ankerraum 22 befindet sich innerhalb der Hülse 23. Die Arbeitsleitung A ist gegenüber diesem Ankerraum 22 durch eine Spezialdichtung, insbesondere Nutringdichtung 25, abgedichtet. Diese Nutringdichtung 25 befindet sich zwischen dem Ventilstößel 5, insbesondere dem ersten Teil 12, und dem Polkern 18. Innerhalb des Ventilstößels 5 verläuft ein Verbindungskanal 15. Dieser Verbindungskanal 15 verbindet den Ankerraum 22 mit der Ventilkammer 3. Da die Ventilkammer 3 stets frei mit der Tankleitung T verbunden ist, ist somit auch der Ankerraum 22 stets drucklos. Der Verbindungskanal 15 wird gebildet durch eine Längsbohrung entlang der Ventillängsachse 38 im Ventilstößel 5 sowie durch Bohrungen senkrecht zur Ventillängsachse 38 von der Oberfläche des Ventilstößels 5 zu der längs verlaufenden Bohrung. Insbesondere durch die zweiteilige Ausführung des Ventilstößels 5 kann die Längsbohrung entlang der Ventillängsachse 38 im Inneren des Ventilstößels 5 hergestellt werden.

Das Ventilgehäuse 2 umfasst ein Basisgehäuseteil 26, einen ersten Ventilkammereinsatz 27 und einen zweiten Ventilkammereinsatz 28. Der erste Ventilkammereinsatz 27 und der zweite Ventilkammereinsatz 28 bilden zusammen die Ventilkammer 3. Das hydraulische 3/2-Magnetwegeventil 1 ist dabei wie folgt aufgebaut bzw. wird wie folgt montiert: Am Elektromagneten 4 befindet sich ein ringförmiger Fortsatz 29. In diesen Fortsatz 29 wird ein Teil des zweiten Ventilkammereinsatzes 28 eingebettet. Der zweite Ventilkammereinsatz 28 wiederum nimmt den ersten Ventilkammereinsatz 27 in sich auf. Die bereits erwähnte Hülse 23 des Elektromagneten 4 erstreckt sich bis zum zweiten Ventilkammereinsatz 28 und ist mit diesem verbunden. Die komplette Einheit bestehend aus Elektromagnet 4, zweitem Ventilkammereinsatz 28 und erstem Ventilkammereinsatz 27 wird in das Basisgehäuseteil 26 eingeschraubt. Hierzu ist am Basisgehäuseteil 26 ein Innengewinde und am Fortsatz 29 des Elektromagneten 4 ein entsprechendes Außengewinde ausgebildet. Die einzelnen Gehäusebestandteile sind gegeneinander abgedichtet.

Des Weiteren umfasst das Gehäuse 2 eine Kappe 30. Diese Kappe 30 umgreift den Elektromagneten 4 und sitzt am Basisgehäuseteil 26 auf.

Innerhalb des ersten Ventilkammereinsatzes 27 ist ein gebohrter Einsatz 35 eingebracht. In diesem gebohrten Einsatz 35 ist die erste Ventilsitzbohrung 6 ausgebildet. Darüber hinaus sitzt in dem ersten Ventilkammereinsatz 27 ein Filter 36. Dieser Filter 36 befindet sich außerhalb der Ventilkammer 3 und in der Druckleitung P.

Des Weiteren ist innerhalb des Basisgehäuseteils 26 eine Volumenausgleichseinheit 37 mit Tankraum 31 integriert. Diese Volumenausgleichseinheit 37 mit Tankraum 31 umfasst einen Volumenausgleichskolben 32, eine Ausgleichsfeder bzw. Längenausgleichsfeder 33 und ein Lager 35 für die Ausgleichsfeder 33. Der Tankraum 31 ist mit der Tankleitung T verbunden. Der Volumenausgleichskolben 32 definiert eine Wandung des Tankraums 31. Der Kolben 32 ist durch die Ausgleichsfeder 33 leicht federbelastet. Die Ausgleichsfeder 33 stützt sich auf einer Seite gegen den Volumenausgleichskolben 32 und auf der anderen Seite gegen das Federlager 34 ab. Das Federlager 34 ist stirnseitig in das Basisgehäuseteil 26 eingeschraubt.

Das hydraulische 3/2-Magnetwegeventil 1 ist weitgehend rotationssymmetrisch bezüglich der Ventillängsachse 38 ausgebildet. Von dieser Rotationssymmetrie weichen selbstverständlich die Druckleitungen P, Arbeitsleitungen A und Tankleitungen T ab. Die Druckleitung P und die Arbeitsleitung A münden an zumindest jeweils einer Stelle auf der Mantelfläche des Basisgehäuseteils 26. Dort sind Ringkanäle 39 ausgeführt. Diese Ringkanäle 39 werden mit O-Ring-Dichtungen 40 abgedichtet, wenn das in Cartridge-Bauart ausgeführte 3/2-Magnetwegeventil 1 in eine entsprechende Aufnahme eingeführt wird.

Fig. 15 zeigt das hydraulische 3/2-Magnetwegeventil 1 gemäß Ausführungsbeispiel im bestromten Zustand. Hier ist gut zu sehen, dass der Ventilstößel 5 gegenüber der Darstellung in Fig. 14 nach links bewegt wurde. Dadurch ist die Arbeitsleitung A über die zweite Ventilsitzbohrung 7 direkt mit der Ventilkammer 3 und somit mit der Tankleitung T und dem Tankraum 31 verbunden. Die Druckleitung P ist durch den Sitz der Kugel 10 in der ersten Ventilsitzbohrung 6 blockiert und somit nicht mit der Ventilkammer 3 verbunden.

Fig. 16 zeigt einen Detailausschnitt aus Fig. 15. An dieser Darstellung kann insbesondere das Differenzflächenverhältnis erläutert werden. Zu beachten ist, dass dieses Differenzflächenverhältnis bei einer geschlossenen zweiten Ventilsitzbohrung 7 und somit bei der in Fig. 14 gezeigten unbestromten Ventilstellung zum Einsatz kommt. Wie die Fig. 16 zeigt, weist der Ventilstößel 5 an der Nutringdichtung 25 einen Dichtdurchmesser D1 auf. Die zweite Ventilsitzbohrung 7 ist mit einem Innendurchmesser D2 ausgeführt. Der Ventilstößel 5 weist in dem Bereich zwischen der Nutringdichtung 25 und der zweiten Ventilsitzbohrung 7 einen kleinsten Durchmesser D3 auf. Bei geschlossener zweiter Ventilsitzbohrung 7 wirkt nun der Druck in der Arbeitsleitung A auf folgende Flächen des Ventilstößels 5: Die erste Fläche berechnet sich durch (D2²/4 * π) - (D3²/4 * π). Die zweite Fläche berechnet sich durch (D1²/4 * π) - (D3²/4 * π). Dadurch, dass die erste Fläche kleiner als die zweite Fläche ist, wirkt im geschlossenen Zustand der zweiten Ventilsitzbohrung 7 der Arbeitsdruck in der gezeigten Darstellung nach rechts. Dadurch wird die Ventildruckfeder 14 unterstützt und die Kegelfläche 11 wird in die zweite Ventilsitzbohrung 7 gezogen.

Anhand des fünften Ausführungsbeispiels wurde aufgezeigt, wie ein hydraulisches 3/2-Magnetwegeventil 1, insbesondere in Cartridge-Bauweise, für eine leckölfreie Arbeitsweise ausgeführt werden kann. In der nicht bestromten Schaltstellung, gezeigt in Fig. 14, wird der Ventilstößel 5 durch die Druckfeder 14 mit der als Kegelfläche 11 ausgebildeten Seite in die zweite Ventilsitzbohrung 7 der Arbeitsleitung gedrückt und sperrt somit den Anschluss dieser Leitung gegenüber dem Tank öldicht ab. Der Ventilstößel 5 ist auf der Magnetseite zum Ankerraum 22 radial mit einer Nutringdichtung 25 ausgeführt. Der Dichtdurchmesser D1 des Ventilstößels 5 zum Ankerraum 22 ist größer ausgeführt als die zweite Ventilsitzbohrung 7. Dadurch entsteht ein definiertes Flächenverhältnis zwischen dem Kegelsitz und dem Abdichtdurchmesser D1 des Ankerraums 22. Wird nun die Arbeitsleitung A mit Druck beaufschlagt, so entsteht eine Differenzkraft über das Flächenverhältnis zwischen der Arbeitsleitung und dem abgedichteten Ankerraum 22, die den Ventilstößel 5 in Richtung des Elektromagneten 4 zieht und zusätzlich zur Federkraft gegen die zweite Ventilsitzbohrung 7 wirkt. Mit ansteigendem Druck in der Arbeitsleitung A erhöht sich die Dichtwirkung. Der Elektromagnet 4 ist bevorzugt so ausgelegt, dass ein Schalten gegen die Federkraft plus Differenzkraft verhindert wird. Die Druckleitung P und die Tankleitung T sind in dieser Stellung miteinander verbunden.

In der bestromten Schaltstellung gemäß Fig. 15 ist die Arbeitsleitung A drucklos, wobei der Ventilstößel 5 gegen die Federkraft mit seiner Kugel 10 die Druckleitung P öldicht abdichtet. Ein über die Druckleitung P angeschlossener Verbraucher, z.B. der Sperrraum 61, kann nun wirksam bis zum ausgelegten Betriebsdruck abgedichtet werden. Dieser Betriebsdruck ist abhängig von der Magnetkraft. In dieser Schaltstellung ist die Arbeitsleitung A drucklos mit der Tankleitung T verbunden. Dadurch kann sich in der Arbeitsleitung A kein Druck bzw. nur ein geringer Staudruck aufbauen.

Die Ausgestaltungen des vorgestellten 3/2-Magnetwegeventils sind, unabhängig von der Cartridge Bauweise und unabhängig von der Anzahl an Leitungen und/oder Schaltstellungen, auch auf weitere Ventilbauarten erfindungsgemäß anwendbar. Insbesondere die Kombination aus Kugelsitz und Kegelsitz in einem Ventil, insbesondere auf einem Stößel, und/oder das Differenzflächenverhältnis sind erfindungsgemäß auf weitere Ventile anwendbar.

Anhand der Fig. 17 und 18 wird nun die konstruktive Ausgestaltung des Magnetwegeventils 1 des Türschließers gemäß dem sechsten Ausführungsbeispiel genauer erläutert. Beide Figuren zeigen hier die unbestromte Schaltstellung mit offener Druckleitung P, wie sie in Fig. 13 auf der linken Seite symbolisch dargestellt ist. Gleiche bzw. funktional gleiche Bauteile sind in allen Ausführungsbeispielen mit den gleichen Bezugszeichen versehen. Insbesondere entspricht das Magnetwegeventil 1, wie es im sechsten Ausführungsbeispiel verwendet wird, dem Magnetwegeventil 1, wie es im fünften Ausführungsbeispiel verwendet wird, bis auf die im Folgenden beschriebenen Unterschiede.

Wie die Fig. 17 und 18 zeigen, sind im sechsten Ausführungsbeispiel gegenüber dem fünften Ausführungsbeispiel die Tankleitung T und die Arbeitsleitung A vertauscht. Dies bedeutet, dass die Arbeitsleitung stets über die freie Öffnung 8 mit der Ventilkammer 3 verbunden ist. Die Verbindung zwischen der Ventilkammer 3 und der Tankleitung T wird über die zweite Ventilsitzbohrung 7 und über die Kegelringfläche 11 gesteuert. Des Weiteren ist der Ventilstößel 5 im sechsten Ausführungsbeispiel einteilig ausgeführt. Darüber hinaus ist der Weg für den Druckausgleich zwischen dem Ankerraum 22 und der Tankleitung T im Magnetventil 1 gemäß dem sechsten Ausführungsbeispiel kürzer. Hier ist die Verbindung 15 als einfache, ebene Fläche zwischen dem Ankerraum 22 und der Tankleitung T ausgebildet. Es bedarf keiner Bohrungen im Ventilstößel 5. Die Verbindung 15 ist als plane Fläche auf dem Ventilstößel 5 oder durch Ausbildung des Ventilstößels 5 als Mehrkant ausgeführt.

Des Weiteren ist das Ventilgehäuse 2 im Magnetventil 1 gemäß dem Ausführungsbeispiel 6 etwas einfacher konstruiert. Die Ventilkammer 3 ist hier nicht mehr zweiteilig mit einem ersten Ventilkammereinsatz 27 und einem zweiten Ventilkammereinsatz 28 aufgebaut. Vielmehr ist hier nur ein Ventilkammereinsatz 27 verbaut.

Die Magnetventile gemäß dem vierten, fünften und sechsten Ausführungsbeispiel des Türschließers 41 können bevorzugt in allen hier vorgestellten Ausführungsbeispielen des Türschließers 41 eingesetzt werden.

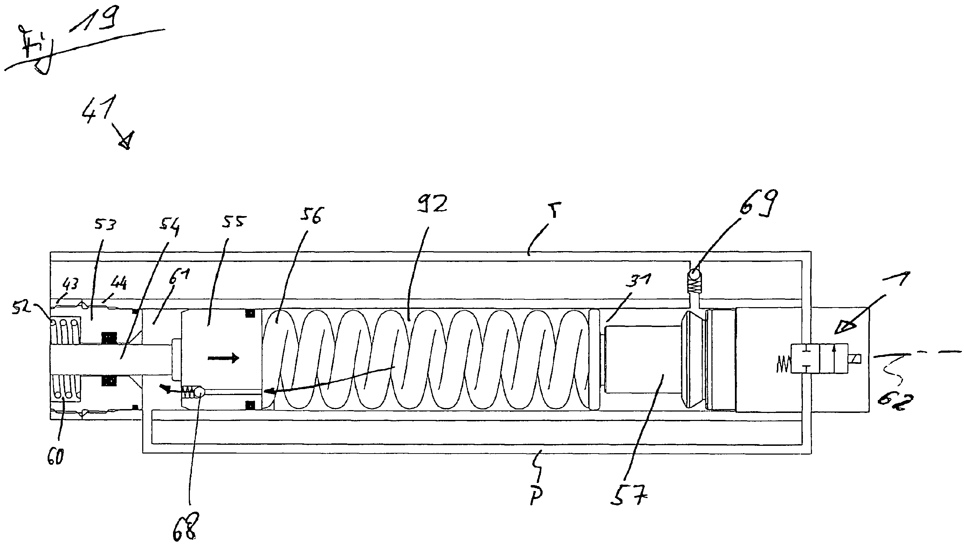

Fig. 19 zeigt einen Türschließer nach einem siebten Ausführungsbeispiel. Gleiche bzw. funktional gleiche Bauteile sind in allen Ausführungsbeispielen mit den gleichen Bezugszeichen versehen. Die im Rahmen des siebten Ausführungsbeispiels vorgestellte Anordnung zur Vermeidung einer sogenannten Rückfederung des Schließerfederspannkolbens 55 kann bevorzugt in allen hier vorgestellten Ausführungsbeispielen des Türschließers 41 angewandt werden.

Fig. 19 zeigt eine Ausbildung des dritten Rückschlagventils 68 im Schließerfederspannkolben 55 als federbelastetes Rückschlagventil. Der Raum innerhalb des Türschließergehäuses 42, insbesondere innerhalb des zweiten Türschließergehäuseteils 44, in welchem sich die Schließerfeder 56 befindet, wird hier als Schließerfederaufnahmeraum 92 bezeichnet. Dieser Schließerfederaufnahmeraum 92 ist ein Raum, welcher sich während des Öffnungsvorgangs der Türe verkleinert, da sich der Schließerfederspannkolben 55 nach rechts bewegt. Darüber hinaus zeigt Fig. 19 das vierte Rückschlagventil 69 ebenfalls als federbelastetes Rückschlagventil. Das dritte Rückschlagventil sperrt Hydraulikfluss aus dem Sperrraum 61 in den Schließerfederaufnahmeraum 92. Das vierte Rückschlagventil sperrt Hydraulikfluss aus dem Schließerfederaufnahmeraum 92 in die Tankleitung T.

Bei dem Druckaufbau im Sperrraum 61 werden alle dort enthaltenen elastischen Elemente, wie beispielsweise Dichtungen, Restluft oder auch das Hydraulikfluid selbst entsprechend komprimiert, was einen unerwünschten Volumenverlust nach sich zieht. Der Federspannkolben 55 gleicht diesen Volumenverlust aus, macht dabei aber einen geringen Folgehub. Letztendlich arretiert der Schließerfederspannkolben 55 nicht exakt an der gewünschten Stelle. Die in Fig. 19 dargestellte Anordnung reduziert diese Rückfederung, indem während des Öffnungsvorgangs aus dem Schließerfederaufnahmeraum 92 aktiv unter Vordruck gesetztes Hydrauliköl über das dritte Rückschlagventil 68 in den Sperrraum 61 umgepumpt wird. Es wird damit bewusst ein relativer Öffnungswiderstand ähnlich einer Öffnungsdämpfung erzeugt, um das Hydrauliköl vorzuspannen und somit Setzungsverhalten vorzuholen. Dank des vierten Rückschlagventils 69 kann das Hydrauliköl aus dem Schließerfederaufnahmeraum 92 nicht in Richtung der Tankleitung T entweichen. Das Hydrauliköl wird somit während des Öffnungsvorgangs im Schließerfederaufnahmeraum 92 durch den Schließerfederspannkolben 55 unter Vorspannung gebracht und strömt mit einem gewissen Vordruck in den Sperrraum 61. Dadurch wird die unerwünschte Rückfederung weitgehend vermieden.

### Bezugszeichenliste

- 1: 3/2-Magnetwegeventil
- 2: Ventilgehäuse
- 3: Ventilkammer
- 4: Elektromagnet
- 5: Ventilstößel
- 6, 7: Ventilsitzbohrungen
- 8: freie Öffnung
- 9: konvexe Oberfläche
- 10: Kugel
- 11: Kegelringfläche
- 12: erster Teil
- 13: zweiter Teil
- 14: Ventildruckfeder
- 15: Verbindungskanal
- 16: Spule
- 17: Anker
- 18: Polkern
- 19: lineare Führung
- 20: Spalt
- 21: Anschlussleitung
- 22: Ankerraum
- 23: Hülse
- 24: Isolierung
- 25: Nutringdichtung
- 26: Basisgehäuseteil
- 27: erster Ventilkammereinsatz
- 28: zweiter Ventilkammereinsatz
- 29: Fortsatz
- 30: Kappe
- 31: Tankraum
- 32: Volumenausgleichskolben
- 33: Ausgleichsfeder
- 34: Federlager
- 35: gebohrter Einsatz
- 36: Filter
- 37: Volumenausgleichseinheit
- 38: Ventillängsachse
- 39: Ringkanäle
- 40: O-Ringabdichtungen
- 41: Türschließer
- 42: Türschließergehäuse
- 43: erstes Türschließergehäuseteil
- 44: zweites Türschließergehäuseteil
- 45: erste Druckfeder
- 46: Dämpfungskolben
- 47: erste Kurvenrolle
- 48: Abtriebswelle, ausgebildet als Nockenwelle
- 49: Abwälzkontur
- 50: zweite Kurvenrolle
- 51: Öffnungskolben
- 52: zweite Druckfeder
- 53: Gehäusetrennwand
- 54: Kolbenstange
- 55: Schließerfederspannkolben
- 56: Schließerfeder
- 57: Einstelleinheit für die Schließerfedervorspannung
- 58: Schließdämpfungsraum
- 59: Kolbenbaugruppeninnenraum, insb. Nockenwellenraum
- 60: Öffnungsdämpfungsraum
- 61: Sperrraum
- 62: Türschließerlängsachse
- 63: zweites Drosselventil
- 64: drittes Drosselventil
- 65: erstes Drosselventil
- 66: erstes Rückschlagventil
- 67: zweites Rückschlagventil
- 68: drittes Rückschlagventil
- 69: viertes Rückschlagventil
- 70: Gleitringdichtung
- 71: Tasche
- 72: zweite Stirnfläche, insb. Taschenboden
- 73: Kolbenführung
- 74: erste Stirnfläche
- 75: zweite gedrosselte Verbindung
- 76: dritte gedrosselte Verbindung
- 77: erste ungedrosselte Verbindung
- 78: erste gedrosselte Verbindung
- 79: erste Achse
- 80: zweite Achse
- 81: erste Zugstange
- 82: zweite Zugstange
- 83: dritte Zugstange
- 84: vierte Zugstange
- 85: Abtriebsachse
- 86: integrierte Spielausgleichsfedern
- 87: Verschraubung
- 88: Federspannmuttern
- 89: erster Abdichtungsflansch
- 90: zweiter Abdichtungsflansch
- 91: Höhe der Abwälzkontur
- 92: Schließerfederaufnahmeraum
- 93: Absatz
- 94: Kolbenbaugruppe
- 95: Zusatzkolben
- P: erste Leitung, insb. Druckleitung
- A: zweite Leitung, insb. Arbeitsleitung
- T: dritte Leitung, insb. Tankleitung

## Patentansprüche

1. Hydraulisches Magnetwegeventil mit einem hydraulischen Magnetwegeventil, insbesondere hydraulischen 3/2-Magnetwegeventil (1), umfassend
- ein Ventilgehäuse (2),
- eine in das Ventilgehäuse (2) integrierte Ventilkammer (3) mit einer ersten Ventilsitzbohrung (6) als Verbindung zu einer ersten Leitung, insbesondere Druckleitung (P), einer freien Öffnung (8) zu einer zweiten Leitung, insbesondere Arbeitsleitung (A), und einer zweiten Ventilsitzbohrung (7) als Verbindung zu einer dritten Leitung, insbesondere Tankleitung (T),
- einen Elektromagneten (4), und
- einen durch den Elektromagneten (4) bewegbaren und teilweise in der Ventilkammer (3) angeordneten Ventilstößel (5),
- wobei der Ventilstößel (5) innerhalb der Ventilkammer (3) eine der ersten Ventilsitzbohrung (6) zugewandte erste Dichtfläche (9) und eine der zweiten Ventilsitzbohrung (7) zugewandte zweite Dichtfläche (11) umfasst, sodass wahlweise die erste Ventilsitzbohrung (6) oder die zweite Ventilsitzbohrung (7) verschließbar ist,
- wobei sich der Ventilstößel (5) aus der Ventilkammer (3) hinaus durch die zweite Ventilsitzbohrung (7) hindurch zum Elektromagneten (4) erstreckt, wobei
am Ventilstößel (5) entlang oder im Ventilstößel eine Verbindung der dritten Leitung zu einem Ankerraum (22) des Elektromagneten (4) besteht, sodass ein Druckaufbau im Ankerraum (22) vermieden wird, **dadurch gekennzeichnet, dass**
ein Durchmesser der ersten Ventilsitzbohrung (6) größer ist als ein Durchmesser (D2) der zweiten Ventilsitzbohrung.

2. Hydraulisches Magnetwegeventil nach einem der vorhergehenden Ansprüche, **dadurch gekennzeichnet, dass** zwischen der ersten Ventilsitzbohrung (6) und dem Ventilstößel (5) eine Ventildruckfeder (14) angeordnet ist.

3. Hydraulisches Magnetwegeventil nach einem der vorhergehenden Ansprüche, **dadurch gekennzeichnet, dass** im unbestromten Zustand des Elektromagneten (4) die zweite Dichtfläche (11) die zweite Ventilsitzbohrung (7) abdichtet, und dass im bestromten Zustand des Elektromagneten (4) die erste Dichtfläche (9) die erste Ventilsitzbohrung (6) abdichtet.

4. Hydraulisches Magnetwegeventil nach einem der vorhergehenden Ansprüche, **dadurch gekennzeichnet, dass** die erste Dichtfläche (9) eine konvexe Oberfläche, insbesondere eine Kugel (10), umfasst.

5. Hydraulisches Magnetwegeventil nach einem der vorhergehenden Ansprüche, **dadurch gekennzeichnet, dass**. die zweite Dichtfläche (11) eine Kegelfläche, insbesondere eine Kegelringfläche, umfasst.

6. Hydraulisches Cartridge-Magnetwegeventil, insbesondere hydraulisches Cartridge-3/2-Magnetwegeventil, umfassend ein hydraulisches Magnetwegeventil (1) nach einem der vorhergehenden Ansprüche, wobei das Ventilgehäuse (2) zum zumindest teilweisen Einführen in eine Ventilaufnahme ausgebildet ist.

7. Hydraulisches Cartridge-Magnetwegeventil nach Anspruch 6, **gekennzeichnet durch** eine Volumenausgleichseinheit (37) mit Tankraum (31), wobei die Volumenausgleichseinheit (37) mit Tankraum (31) im Ventilgehäuse (2) integriert ist oder an das Ventilgehäuse (2) angeflanscht ist.

8. Türschließer (41), insbesondere Drehtürschließer, mit Feststellfunktion oder Freilauffunktion umfassend ein hydraulisches Magnetventil (1) nach einem der Ansprüche 1 bis 5 oder ein hydraulisches Cartridge-Magnetwegeventil nach einem der Ansprüche 6 oder 7, wobei die Ventilaufnahme im Türschließer (41) ausgebildet ist.

9. Türschließer nach Anspruch 8 umfassend
ein Türschließergehäuse (42),
eine mit einer Tür verbindbare Abtriebswelle (48),
eine mit der Abtriebswelle (48) verbundene und im Türschließergehäuse (42) geführte Kolbenbaugruppe (94),
eine Schließerfeder (56),
eine zur Verbindung der Kolbenbaugruppe (94) mit der Schließerfeder (56) angeordnete Kolbenstange (54), und
einen zum Blockieren der Schließerfeder (56) ausgebildeten hydraulischen Sperrraum (61).

10. Türschließer nach einem der Ansprüche 8 oder 9, **gekennzeichnet durch** eine Freilaufanordnung, welche dazu ausgebildet ist eine translatorische Bewegung der Kolbenbaugruppe (94) entkoppelt von der Schließerfeder (56) bei blockierter Schließerfeder (56) zu ermöglichen.

11. Türschließer nach einem der Ansprüche 9 oder 10, **gekennzeichnet durch** eine im Türschließergehäuse (42) zwischen der Kolbenbaugruppe (94) und der Schließerfeder (56) angeordnete fluiddichte Trennwand (53), wobei die Kolbenstange (54) fluiddicht durch die Trennwand (53) verläuft.

12. Türschließer nach einem der Ansprüche 9 bis 11, **gekennzeichnet durch** einen im Türschließergehäuse (42) geführten und an der Schließerfeder (56) anliegenden Schließerfederspannkolben (55).

13. Türschließer nach den Ansprüchen 11 und 12, **dadurch gekennzeichnet, dass** zwischen der Trennwand (53) und dem Schließerfederspannkolben (55) der Sperrraum (61) ausgebildet ist.

14. Türschließer nach einem der Ansprüche 9 bis 13, **dadurch gekennzeichnet, dass** auf einer der Kolbenstange (54) abgewandten Seite der Kolbenbaugruppe (94) ein Schließdämpfungsraum (58) zwischen dem Türschließergehäuse (42) und der Kolbenbaugruppe (94) ausgebildet ist, vom Sperrraum (61) die erste Leitung, insbesondere Druckleitung (P), zum Magnetwegeventil (T) führt, vom Schließdämpfungsraum (58) die zweite Leitung, insbesondere Arbeitsleitung (A), zum Magnetwegeventil (1) führt, und vom Magnetwegeventil (1) die dritte Leitung, insbesondere Tankleitung (T), zu einem Tankraum (31) führt.

## Claims

1. A hydraulic directional magnetic valve with a hydraulic directional magnetic valve, in particular hydraulic directional 3/2 magnetic valve (1), comprising
- a valve housing (2),
- incorporated into the valve housing (2), a valve chamber (3) with a first valve seat bore (6) as a connection to a first line, in particular a pressure line (P), a free opening (8) to a second line, in particular an operating line (A), and a second valve seat bore (7) as a connection to a third line, in particular a reservoir line (T),
- an electromagnet (4), and
- a valve spindle (5) movable by the electromagnet (4) and partially disposed in the valve chamber (3),
- wherein, within the valve chamber (3), the valve spindle (5) comprises a first sealing surface (9) oriented towards the first valve seat bore (6), and a second sealing surface (11) oriented towards the second valve seat bore (7), such that selectively the first valve seat bore (6) or the second valve seat bore (7) is closable,
- wherein the valve spindle (5) extends out of the valve chamber (3) through the second valve seat bore (7) as far as to the electromagnet (4), wherein there is a connection of the third line to an armature compartment (22) of the electromagnet (4) along the valve spindle (5) or in the valve spindle so that pressure built-up is prevented in the armature compartment (22),
**characterized in that** a diameter of the first valve seat bore (6) is larger than a diameter (D2) of the second valve seat bore.

2. The hydraulic directional magnetic valve according to any of the preceding claims, **characterized in that** a valve pressure spring (14) is disposed between the first valve seat bore (6) and the valve spindle (5).

3. The hydraulic directional magnetic valve according to any of the preceding claims, **characterized in that** in the non-energized condition of the electromagnet (4) the second sealing surface (11) seals the second valve seat bore (7), and in the energized condition of the electromagnet (4) the first sealing surface (9) seals the first valve seat bore (6).

4. The hydraulic directional magnetic valve according to any of the preceding claims, **characterized in that** the first sealing surface (9) comprises a convex surface, in particular a sphere (10).

5. The hydraulic directional magnetic valve according to any of the preceding claims, **characterized in that** the second sealing surface (11) comprises a cone surface, in particular a cone ring surface.

6. A hydraulic cartridge directional magnetic valve, in particular a hydraulic cartridge 3/2 directional magnetic valve, comprising a hydraulic directional magnetic valve (1) according to any of the preceding claims, wherein the valve housing (2) is formed at least partially for insertion into a valve reception.

7. The hydraulic cartridge directional magnetic valve according to claim 6, **characterized by** a volume compensating unit (37) with a reservoir compartment (31), wherein the volume compensating unit (37) with the reservoir compartment (31) is incorporated into the valve housing (2) or flanged to the valve housing (2).

8. A door closer (41), in particular a swing door closer, with hold-open function or free-swing function, comprising a hydraulic directional magnetic valve (1) according to any of the claims 1 to 5, or a hydraulic cartridge directional magnetic valve according to any of the claims 6 or 7, wherein the valve reception is formed in the door closer (41).

9. The door closer according to claim 8, comprising a door closer housing (42),
an output shaft (48) connectable to a door,
a piston sub-assembly (94) connected to the output shaft (48) and guided in the door closer housing (42),
a closer spring (56),
a piston rod (54) disposed for connecting the piston sub-assembly (94) to the closer spring (56) and
a hydraulic blocking compartment (61) for blocking the closer spring (56).

10. The door closer according to any of the claims 8 or 9, **characterized by** a free-swing arrangement, which is formed to allow for a translatory movement of the piston sub-assembly (94) uncoupled from the closer spring (56) with the closer spring (56) being blocked.

11. The door closer according to any of the claims 9 or 10, **characterized by** a separating wall (53), which is disposed in a fluid-tight manner in the door closer housing (42) between the piston sub-assembly (94) and the closer spring (56), wherein the piston rod (54) extends in a fluid-tight manner through the separating wall (53).

12. The door closer according to any of the claims 9 to 11, **characterized by** a closer spring tensioning piston (55) guided in the door closer housing (42) and resting against the closer spring (56).

13. The door closer according to the claim 11 and 12, **characterized in that** the blocking compartment (61) is formed between the separation wall (53) and the closer spring tensioning piston (55).

14. The door closer according to any of the claims 9 to 13, **characterized in that** on a side of the piston sub-assembly (94) facing away from the piston rod (54), a closing dampening compartment (58) is formed between the door closer housing (42) and the piston sub-assembly (94), the first line, in particular the pressure line (P) extends from the blocking compartment (61) to the directional magnetic valve (1), the second line, in particular the operating line (A), extends from the closing dampening compartment (58) to the directional magnetic valve (1) and the third line, in particular reservoir line (T), extends from the directional magnetic valve (1) to a reservoir compartment (31).

## Revendications

1. Distributeur magnétique hydraulique à orifices avec un distributeur magnétique hydraulique à orifices, tout particulièrement un distributeur magnétique hydraulique à 3 orifices (1), comportant
- un boîtier de soupape (2),
- un compartiment de soupape (3), intégré dans le boîtier de soupape (2), avec un premier alésage de siège de soupape (6) comme connexion à une première conduite, tout particulièrement conduite de pression (P), une ouverture libre (8) à une deuxième conduite, tout particulièrement conduite de travail (A), et un deuxième alésage de siège de soupape (7) comme connexion à une troisième conduite, tout particulièrement conduite de réservoir (T),
- un électro-aimant (4), et
- un poussoir de soupape (5) qui est déplaçable par l'électro-aimant (4) et est partiellement agencé dans le compartiment de soupape (3),
- dans le compartiment de soupape (3), le poussoir de soupape (5) comporte une première surface d'étanchéité (9) orientée vers le premier alésage de siège de soupape (6), et une deuxième surface d'étanchéité (11) orientée vers le deuxième alésage de siège de soupape (7), de sorte que le premier alésage de siège de soupape (6) ou le deuxième alésage de siège de soupape (7) peut être obturé au choix,
- le poussoir de soupape (5) s'étendant en dehors du compartiment de soupape (3) à travers le deuxième alésage de siège de soupape (7) vers l'électro-aimant (4), une connexion de la troisième conduite à l'espace d'armature (22) de l'électro-aimant (4) étant présente le long du poussoir de soupape (5) ou dans le poussoir de soupape, de sorte qu'une mise sous pression dans l'espace d'armature (22) est évitée,
**caractérisé en ce qu'**un diamètre du premier alésage de siège de soupape (6) est plus grand qu'un diamètre (D2) du deuxième alésage de siège de soupape.

2. Distributeur magnétique hydraulique à orifices selon l'une des revendications précédentes, **caractérisé en ce qu'**un ressort de pression de soupape (14) est agencé entre le premier alésage de siège de soupape (6) et le poussoir de soupape (5).

3. Distributeur magnétique hydraulique à orifices selon l'une des revendications précédentes, **caractérisé en ce que**, dans la condition non-alimentée de l'électro-aimant (4), la deuxième surface d'étanchéité (11) étanchéifie le deuxième alésage de siège de soupape (7) et, dans la condition alimentée de l'électro-aimant (4), la première surface d'étanchéité (9) étanchéifie le premier alésage de siège de soupape (6).

4. Distributeur magnétique hydraulique à orifices selon l'une des revendications précédentes, **caractérisé en ce que** la première surface d'étanchéité (9) comporte une surface convexe, tout particulièrement une sphère (10).

5. Distributeur magnétique hydraulique à orifices selon l'une des revendications précédentes, **caractérisé en ce que** la deuxième surface d'étanchéité (11) comporte une surface conique, tout particulièrement une surface à bague conique.

6. Distributeur magnétique hydraulique à orifices à cartouche, tout particulièrement distributeur magnétique hydraulique à 3 orifices à cartouche, comportant un distributeur magnétique hydraulique à orifices (1) selon l'une des revendications précédentes, le boîtier de soupape (2) étant aménagé à être introduit au moins partiellement dans une réception de soupape.

7. Distributeur magnétique hydraulique à orifices à cartouche selon la revendication 6, **caractérisé par** une unité de compensation de volume (37) avec compartiment à réservoir (31), l'unité de compensation de volume (37) avec compartiment à réservoir (31) étant intégrée dans le boîtier de soupape (2) ou étant bridée sur le boîtier de soupape (2).

8. Ferme-porte (41), tout particulièrement ferme-porte pour porte tournante, avec fonction d'arrêt ou fonction de roue libre, comportant un distributeur magnétique hydraulique à orifices (1) selon l'une des revendications 1 à 5 ou un distributeur magnétique hydraulique à orifices à cartouche selon l'une des revendications 6 ou 7, la réception de soupape étant aménagée dans le ferme-porte (41).

9. Ferme-porte selon la revendication 8, comportant un boîtier de ferme-porte (42),
un arbre de sortie (48) qui peut être connecté à une porte,
un sous-ensemble de pistons (94) qui est connecté à l'arbre de sortie (48) et guidé dans le boîtier de ferme-porte (42),
un ressort de fermeture (56),
une tige de piston (54) agencée pour la connexion du sous-ensemble de pistons (94) au ressort de fermeture (56), et
un compartiment de blocage hydraulique (61) aménagé à bloquer le ressort de fermeture (56).

10. Ferme-porte selon l'une des revendications 8 ou 9, **caractérisé par** un agencement de roue libre, lequel est aménagé à permettre un mouvement translatoire du sous-ensemble de pistons (94) désaccouplé du ressort de fermeture (56) avec le ressort de fermeture (56) étant bloqué.

11. Ferme-porte selon l'une des revendications 9 ou 10, **caractérisé par** une cloison de séparation (53) étanche aux fluides agencée dans le boîtier de ferme-porte (42) entre le sous-ensemble de pistons (94) et le ressort de fermeture (56), la tige de piston (54) s'étendant de façon étanche aux fluides à travers la cloison de séparation (53).

12. Ferme-porte selon l'une des revendications 9 à 11, **caractérisé par** un piston tendeur de ressort de fermeture (55) qui est guidé dans le boîtier de ferme-porte (42) et plaqué contre le ressort de fermeture (56).

13. Ferme-porte selon les revendications 11 et 12, **caractérisé en ce que** l'espace de blocage (61) est aménagé entre la cloison de séparation (53) et le piston tendeur de ressort de fermeture (55).

14. Ferme-porte selon l'une des revendications 9 à 13, **caractérisé en ce que**, d'un côté du sous-ensemble de piston (94) détourné de la tige de piston (54), est aménage un compartiment d'amortissement de fermeture (58) entre le boîtier de ferme-porte (42) et le sous-ensemble de piston (94), une première conduite, tout particulièrement conduite de pression (P), menant du compartiment de blocage (61) au distributeur magnétique à orifices (1), la deuxième conduite, tout particulièrement conduite de travail (A) menant du compartiment d'amortissement de fermeture (58) au distributeur magnétique à orifices (1), et la troisième conduite, tout particulièrement conduite de réservoir (T) menant du distributeur magnétique à orifices (1) à un compartiment de réservoir (31).
